# EUROPEAN PATENT APPLICATION

(11) **EP 4 776 022 A1**
(43) Date of publication of application: **15.07.2026**
(21) Application number: 25224680.6
(22) Date of filing: 17.12.2025
(51) Int. Cl.: G01S 7/48, G01S 7/481, G01S 7/497, G01S 17/42, G01S 17/933

(54) **WAVELENGTH LIDAR SYSTEM**

(30) Priority: 08.01.2025 US 202519013652
(71) Applicant: The Boeing Company, Arlington, VA 22202 (US)
(72) Inventor: KANDORIA, Balram Khima, Arlington, 22202 (US); HILLER, Nathan D., Arlington, 22202 (US)
(74) Representative: Boult Wade Tennant LLP

(57) **Abstract**

A method controls taxiing of an aircraft. A first laser beam and a second laser beam are emitted from the aircraft using a wavelength configuration. A first backscatter light and a second backscatter light are received at the aircraft in response to emitting the first laser beam and the second laser beam. First backscatter data is generated using the first backscatter light. Second backscatter data is generated using the second backscatter light. A first signal to noise ratio is determined using the first backscatter data. A second signal to noise ratio is determined using the second backscatter data. The wavelength configuration is controlled for the first laser beam and the second laser beam emitted by the lidar system using the first signal to noise ratio and the second signal to noise ratio. A taxiing operation is performed for the aircraft using the first backscatter data and the second backscatter data.

## Description

### FIELD

The present disclosure relates generally to aircraft and in particular, to aircraft using lidar systems.

### BACKGROUND

Laser-based sensor systems can replace many vital aircraft instruments and add new capabilities for aircraft. For example, a light detection and ranging (LIDAR) system can be used to detect objects relative to an aircraft. With a lidar system, laser beam pulses are emitted into the air while an aircraft is on the ground. The lidar system measures the time for backscatter from the laser beam pulses to be detected.

These laser beam pulses can be swept to scan the environment. The backscatter resulting from the laser beam pulses being reflected are detected. Distances are deduced from the time delta between light being emitted and received from the lidar. Individual detections are sparsely collected to form a point cloud which is further processed to identify point clumps which likely represent objects. These can include other aircraft, vehicles, and even birds, making them visible and distinguishable based on their size, shape, and motion. The locations of these objects relative to the aircraft can be determined and used to enhance situational awareness, improve safety, and assist in decision-making, especially in environments such as airports.

### SUMMARY

There is described herein an aircraft taxi control system comprising a lidar system and a controller. The lidar system is configured to emit a first laser beam and a second laser beam from an aircraft using a wavelength configuration. The lidar system is configured to receive a first backscatter light and a second backscatter light at the aircraft in response to emitting the first laser beam and the second laser beam. The lidar system is configured to generate first backscatter data using the first backscatter light and second backscatter data using the second backscatter light. The controller is configured to determine a first signal to noise ratio using the first backscatter data and a second signal to noise ratio using the second backscatter data. The controller is configured to control the wavelength configuration for the first laser beam and the second laser beam emitted by the lidar system using the first signal to noise ratio and the second signal to noise ratio. The controller is configured to perform a taxiing operation for the aircraft using the first backscatter data and the second backscatter data.

There is described herein a sensor system comprising a lidar system and controller. The lidar system is configured to emit a first laser beam and a second laser beam from a platform. The lidar system is configured to receive a first backscatter light at the platform in response to emitting the first laser beam and second backscatter light at the platform in response to emitting the second laser beam. The lidar system is configured to generate first backscatter data using the first backscatter light and second backscatter data using the second backscatter light. The controller is configured to determine a first signal to noise ratio using the first backscatter data and a second signal to noise ratio using the second backscatter data. The controller is configured to control a wavelength configuration for the first laser beam and the second laser beam emitted by lidar system using the first signal to noise ratio and the second signal to noise ratio.

There is described herein a method for controlling taxiing of an aircraft. A first laser beam and a second laser beam are emitted from the aircraft using a wavelength configuration. A first backscatter light and a second backscatter light are received at the aircraft in response to emitting the first laser beam and the second laser beam. First backscatter data is generated using the first backscatter light and second backscatter data is generated using the second backscatter light. A first signal to noise ratio is determined using the first backscatter data. A second signal to noise ratio is determined using the second backscatter data. The wavelength configuration is controlled for the first laser beam and the second laser beam emitted by lidar system using the first signal to noise ratio and the second signal to noise ratio. A taxiing operation is performed for the aircraft using the first backscatter data and the second backscatter data.

There is described herein a method for controlling a lidar system. A first laser beam and a second laser beam are emitted from a platform. A first backscatter light is received at the platform in response to emitting the first laser beam and a second backscatter light is received at the platform in response to emitting the second laser beam. First backscatter data is generated using the first backscatter light. Second backscatter data is generated using the second backscatter light. A first signal to noise ratio is determined using the first backscatter data. A second signal to noise ratio is determined using the second backscatter data. A configuration wavelength for the first laser beam and the second laser beam emitted by the lidar system is controlled using the first signal to noise ratio and the second signal to noise ratio.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
Figure 1 is an illustration of an aircraft;
Figure 2 is an illustration of a block diagram of a sensor environment;
Figure 3 is an illustration of wavelength configurations for an aircraft;
Figure 4 is an illustration of a block diagram of an aircraft employing a sensor system;
Figure 5 is an illustration of dataflow in a controller;
Figure 6 is an illustration of a flowchart of a process for controlling a lidar system;
Figure 7 is an illustration of a flowchart of a process for controlling taxiing an aircraft;
Figure 8 is an illustration of a flowchart of a process for controlling the wavelength configuration for receivers;
Figure 9 is an illustration of a flowchart of a process for controlling the wavelength configuration;
Figure 10 is an illustration of a flowchart of a process for controlling the wavelength configuration;
Figure 11 is an illustration of a block diagram depicting an inconsistency;
Figure 12 is an illustration of a flowchart of a process for detecting an inconsistency;
Figure 13 is an illustration of a flowchart of a process for determining characteristics of an inconsistency;
Figure 14 is an illustration of a flowchart of a process for training a machine learning model in a machine learning model system to detect inconsistencies; and
Figure 15 is an illustration of a block diagram of a data processing system.

### DETAILED DESCRIPTION

The illustrative examples recognize and take into account one or more different considerations as described herein. For example, an aircraft for the lidar systems emits laser beam pulses in directions around the aircraft. Backscatter light generated responses of the laser beam pulses are used to detect objects located around the aircraft. This information enables aircraft to detect objects that may be obstacles for movement of the aircraft on the ground. The detection of these obstacles enable the autonomous taxiing system to perform maneuvers to avoid the obstacles.

The illustrative examples also recognize that erroneously detecting a "phantom" obstacle also has undesired implications. A phantom obstacle is an obstacle that is identified by the lidar but is not actually present. These implications can include performing unneeded avoidance maneuvers. Performing unneeded maneuvers can also result in delays and reducing an operator's trust in using lidar systems.

Lidar systems are highly accurate and able to reliably operate at high frequencies which is ideal for use in detection and avoidance. The illustrative examples also recognize and take into account that as the use of lidar systems become more prevalent in sensor systems for ground operations, an increase in erroneous or phantom obstacle detection can occur with increasing use of active lidar sensors.

Erroneous detection can be caused by a lidar system detecting laser beams emitted from other lidar systems in aircraft on the ground. Correlation can be calculated between the number of active lidar sensors in the aircraft and the probability of erroneous obstacle detection for nearby aircraft. This relationship is exacerbated with aircraft of the same make and model.

For example, a first aircraft is actively using a lidar system for detection and avoidance. If a second aircraft emits laser beams within the same or overlapping spectrum band as the first aircraft, that first aircraft can detect light from those laser beams from the second aircraft and erroneously detect an obstacle between the first aircraft in the second aircraft. This situation involves the detection of a phantom obstacle by the first aircraft. The second aircraft is at a sufficient distance and not considered an obstacle. However, the phantom obstacle resulting from detecting laser beams emitted by the second aircraft results in detecting an obstacle that may require additional maneuvers to avoid the phantom obstacle.

The illustrative examples provide a method, apparatus, system, and computer program product for detecting objects using lidar systems. Illustrative examples can increase performance of taxiing systems as it provides information to pilots to perform manual taxiing of aircraft. With illustrative examples, autonomous taxiing of aircraft can be used to reduce cost and improve safety for aircraft moving on the ground. Autonomous taxiing can include the use of lidar systems to perform detect and avoid (DAA) operations for aircraft on the ground.

For example, a laser beam can be emitted from a lidar sensor in an aircraft with a range of wavelengths. A receiver can detect the backscatter light for that laser beam, more specifically the range of wavelengths, to determine the distance to an object from which the laser beam reflects or scatters.

With this and certain other examples, the wavelength of the laser beam is at the center of the possible range of wavelengths for the receiver. If a light from another lidar system has a wavelength or wavelengths that overlaps or is within the range of wavelengths detected by the receiver, the light from that lidar system can be detected and erroneously interpreted as an object. By changing the wavelength of the laser beam and range of possible wavelength detections of the receiver, the receiver may no longer detect light from the other lidar system. As a result, the erroneous detection of objects can be avoided.

In some examples, a lidar system includes two lidar sensors that each emits laser beams and detects backscatter light. Each lidar sensor in the lidar system operates at its own unique wavelength. Both lidar sensors are initialized using two distinct and unique frequency bands to ensure operations are not susceptible to common mode reactions. If the signal to noise ratio is greater than a selected threshold for a given lidar sensor, then the wavelength configuration of the lidar system changes. When the signal-to-noise ratio is greater than the threshold, the signal is sufficiently strong to indicate that light has been detected from other sources other than light reflections off surfaces from the laser being emitted by the lidar system. These other sources can be laser beams from other lidar systems on other platforms.

The configuration change in the wavelength configuration is performed in real-time during the operation of the aircraft to avoid erroneous data being used in practice and to enable continuous and constant safety monitoring. In this and certain other examples, this wavelength configuration change changes the frequency band of the laser beam being emitted and the associated filters in a receiver that detects backscatter light generated in response to the laser beam.

The total number of wavelength configurations can be based on the number of unique wavelengths pairs that exist in the system. For example, the number of configurations is four times the number of unique wavelength pairs in a two lidar configuration as in the illustrative example. If all of the wavelength configurations have been used, at least one of a new set of wavelengths can be used or aircraft speed can be reduced. The reduction speed can result in determining a new signal to noise threshold or the lidar sensors.

The results of changing wavelengths increase a platform's ability to filter out erroneous or phantom light detected from sources instead of backscatter light resulting from laser beams emitted from the lidar system. Thus, in these illustrative examples, the "phantom" signals detected can be from a light source that has a similar frequency as the emitted light from the lidar can be identified as noise and cause a change in wavelength configurations to reduce detecting this type of undesired noise.

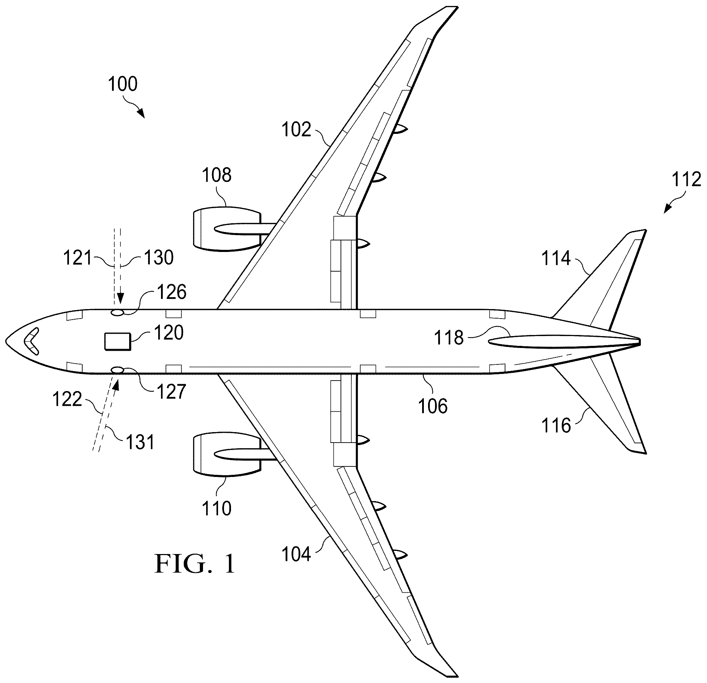

With reference now to the figures, and in particular, with reference to Figure 1, an illustration of an aircraft is depicted in accordance with an illustrative example. In this and certain other illustrative examples, aircraft 100 has wing 102 and wing 104 attached to body 106. Aircraft 100 includes engine 108 attached to wing 102 and engine 110 attached to wing 104.

Body 106 has tail section 112. Horizontal stabilizer 114, horizontal stabilizer 116, and vertical stabilizer 118 are attached to tail section 112 of body 106.

Aircraft 100 is an example of an aircraft in which lidar system 120 may be implemented . In this and certain other examples, lidar system 120 is a sensor system that operates to make measurements that can be used to detect objects. In this and certain other examples, lidar system 120 emits laser beam 121 from port 126, and laser beam 122 from port 127.

In response to emitting laser beam 121, backscatter light 130 can be detected at port 126. Backscatter light 131 can be detected at port 127 in response to emitting laser beam 122. These laser beams can be scanned in different directions to different locations around aircraft 100 from the ports. The backscatter detected in response can be used to generate information about the environment around aircraft 100. For example, backscatter light can be analyzed to determine various parameters such as the presence of objects, object types, environmental conditions, and other parameters.

In this and certain other examples, lidar system 203 can be used while aircraft 100 is moving on the ground to detect the presence of objects. For example, aircraft 100 can taxi to a runway or to a gate and use lidar system 120 to detect objects such as other aircraft or vehicles while taxiing. This information can be used by a pilot, or auto taxi system to control the movement of aircraft 100.

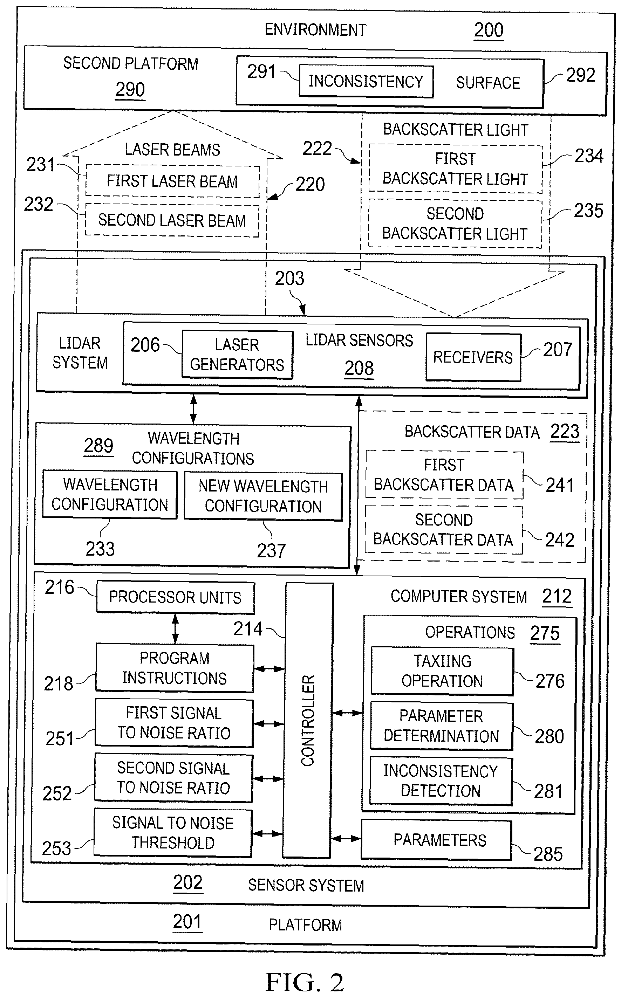

With reference now to Figure 2, an illustration of a block diagram of a sensor environment is depicted in accordance with an illustrative example. As depicted, platform 201 is located in environment 200. Sensor system 202 in platform 201 operates to generate information about at least one of platform 201 or environment 200 around platform 201.

In this and certain other illustrative examples, platform 201 can take a number of different forms. For example, platform 201 can be selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, an artificial intelligence controlled vehicle, a trained neural network controlled vehicle, a glider, a surface ship, a tank, a personnel carrier, a train, a spacecraft, a space station, a satellite, a high altitude platform system (HAPS), a submarine, an automobile, a power plant, a bridge, a dam, a house, a manufacturing facility, a building, and other suitable types of platforms. Aircraft 100 in Figure 1 is one example implementation for platform 201.

As depicted, sensor system 202 comprises lidar system 203, controller 214 and computer system 212. Controller 214 is located in computer system 212.

Lidar system 203 is configured to emit laser beams 220 and receive backscatter light 222 in response to emitting laser beams 220. In this and certain other illustrative examples, each laser beam in laser beams 220 can be one of a continuous laser beam and a pulsed laser beam.

In this and certain other examples, lidar system 203 is comprised of lidar sensors 208. Lidar sensors are formed from laser generators 206 and receivers 207. Each lidar sensor can have a laser generator and a receiver. In this and certain other examples, each laser generator can emit a laser beam and each receiver can detect backscatter light 222 generated in response to emission of that laser beam. In some examples, a laser generator can emit more than one laser beam. Each laser generator can emit a laser beam from the same or different location in platform 201.

In this and certain other examples, receivers 207 detect backscatter light 222 generated in response to the emission of laser beams 220. Receivers 207 generate backscatter data 223 in response to receiving backscatter light 222 that is generated in response to the emission of laser beams 220. Backscatter data 223 is sent to controller 214 for processing.

Further, each lidar sensor in lidar sensors 208 can be configured to emit laser beams 220 and detect backscatter light 222 using different wavelengths or ranges of wavelengths. For example, a first laser generator in a first lidar sensor can emit laser beams 220 using a first range of wavelengths. The first lidar receiver in the first lidar sensor uses filters to detect backscatter light in the first range of wavelengths. Further in this and certain other examples, a second laser generator in a second lidar sensor can emit laser beams using a second range of wavelengths. The second lidar receiver in the second lidar sensor uses filters to detect backscatter light in the second range of wavelengths. Thus, the lidar sensors can be configured to detect objects using different ranges of wavelengths. These ranges of wavelengths can also be described as frequency bands or wavelength bands. As a result, by changing the wavelength of the laser beams and the wavelength band detected by the receivers, detecting light from laser beams emitted by other lidar systems can be reduced.

In these and certain other examples, the lidar systems have hardware that can be configured to only detect a set of programed wavelengths. For example, filters or other circuits in receivers 207 can be adjusted to filter or pass through backscatter light having wavelengths for the first laser beam and the second laser beam with the new wavelength configuration. In other examples, the selection of wavelengths can be performed post-processing. This post processing can be performed by processors in lidar system 203.

As depicted, lidar system 203 can take a number of different forms. For example, lidar system 203 can comprise at least one of an optical phased array lidar, rotating lidar, mems lidar, coherent lidar, direct detection lidar, pulsed lidar, a continuous wave lidar, or other type of lidar.

As depicted, controller 214 in computer system 212 is in communication with lidar system 203. Controller 214 receives backscatter data 223 from lidar system 203 and controls the operation of lidar system 203. Controller 214 also analyzes backscatter data 223 to perform a number of operations 275.

As used herein, "a number of" when used with reference to items, means one or more items. For example, "a number of operations" is one or more operations.

Controller 214 can be implemented in software, hardware, firmware or a combination thereof. When software is used, the operations performed by stairs okay can be implemented in program instructions configured to run on hardware, such as a processor unit. When firmware is used, the operations performed by controller 214 can be implemented in program instructions and data and stored in persistent memory to run on a processor unit. When hardware is employed, the hardware can include circuits that operate to perform the operations in controller 214.

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

Computer system 212 is a physical hardware system and includes one or more data processing systems. When more than one data processing system is present in computer system 212, those data processing systems are in communication with each other using a communications medium. The communications medium can be a network. The data processing systems can be selected from at least one of a computer, a server computer, a tablet computer, or some other suitable data processing system.

As depicted, computer system 212 includes a number of processor units 216 that are capable of executing program instructions 218 implementing processes in the illustrative examples. In other words, program instructions 218 are computer-readable program instructions.

As used herein, a processor unit in the number of processor units 216 is a hardware device and is comprised of hardware circuits such as those on an integrated circuit that respond to and process instructions and program code that operate a computer.

When the number of processor units 216 executes program instructions 218 for a process, the number of processor units 216 can be one or more processor units that are in the same computer or in different computers. In other words, the process can be distributed between processor units 216 on the same or different computers in computer system 212.

Further, the number of processor units 216 can be of the same type or different types of processor units. For example, the number of processor units 216 can be selected from at least one of a single core processor, a dual-core processor, a multi-processor core, a general-purpose central processing unit (CPU), a graphics processing unit (GPU), a digital signal processor (DSP), or some other type of processor unit.

In this illustrative and certain other examples, controller 214 controls lidar system 203 to perform a number of different operations. For example, lidar system 203 is controlled to emit first laser beam 231 and emit second laser beam 232 in laser beams 220 from platform 201. Lidar system 203 is also controlled to detect backscatter light 222 generated in response to the emission of laser beams 220.

In this and certain other illustrative examples, wavelength configurations 289 are configurations for use by lidar system 203 to control characteristics in emitting laser beams 220 and detecting backscatter light 222.

For example, laser beams 220 are emitted by one or more of laser generators 206 with wavelength configuration 233 in wavelength configurations 289. In this and certain other illustrative examples, wavelength configuration 233 defines wavelengths used by lidar sensors 208 to emit laser beams 220.

For example, the wavelength can be set for each of laser beams 220 using wavelength configuration 233. In this and certain other examples, first laser beam 231 can have a first wavelength while second laser beam 232 can have a second wavelength that is different from the first wavelength.

In some examples, the wavelength can be the same for the different laser beams. In other illustrative examples, one or more laser beams in addition to first laser beam 231 and second laser beam 232 can be emitted depending on wavelength configuration 233. These laser beams can be emitted from different locations from the locations used to emit first laser beam 231 and second laser beam 232 Also, the laser beam type can be a continuous laser beam or pulsed laser beam. Laser beams 220 can be the same or different types of laser beams.

Lidar system 203 is also controlled to receive first backscatter light 234 at platform 201 in response to emitting first laser beam 231 and second backscatter light 235 at platform 201 in response to emitting second laser beam 232. These backscatter lights are received by one or more receivers 207 in lidar system 203.

In this and certain other examples, one or more receivers 207 and lidar system 203 generates backscatter data 223 that is sent to controller 214. For example, lidar system 203 generates first backscatter data 241 using first backscatter light 234 and generates second backscatter data 242 using second backscatter light 235 to form backscatter data 223.

In this and certain other illustrative examples, wavelength configuration 233 is also used to control the manner in which receivers 207 receive backscatter light 222 to generate backscatter data 223. For example, a receiver in receivers 207 can be configured as a wavelength or range of wavelengths to detect first backscatter light 234 generated in response to a laser generator in laser generators 206 emitting first laser beam 231. In this and certain other examples, the wavelength of first backscatter light 234 is the same as the wavelength of first laser beam 231. The receiver can be configured to filter or pass backscatter light 222 having the wavelength for first backscatter light 234. In this manner, that detector can detect first backscatter light 234.

With backscatter data 223, controller 214 determines first signal to noise ratio 251 using first backscatter data 241. Controller 214 also determines second signal to noise ratio 252 using second backscatter data 242. Controller 214 controls wavelength configuration 233 for first laser beam 231 and second laser beam 232 emitted by lidar system 203 using first signal to noise ratio 251 and second signal to noise ratio 252.

In these examples, controller 214 can control wavelength configuration 233 and maintain the signal to noise ratio such that backscatter data has as a desired quality for use in performing operations 275. In other words, wavelength configuration 233 can be controlled such that first backscatter data 241 and second backscatter data 242 have a sufficient level of quality above noise that enables determining information about environment 200 around platform 201 with a desired level of accuracy. In these examples, wavelength configuration 233 can be changed to reduce the effects of undesired noise from other laser beam sources. The laser beams causing undesired noise can originate from lidar systems in other platforms.

In some illustrative examples, controller 214 can change wavelength configuration 233 to new wavelength configuration 237 in response to at least one of first signal to noise ratio 251 or second signal to noise ratio 252 being greater than signal to noise threshold 253 for first signal to noise ratio 251 and second signal to noise ratio 252. Signal to noise threshold 253 can be the same for both first signal to noise ratio 251 and second signal to noise ratio 252. In other examples, a different value can be present for signal to noise threshold 253 for these signals to noise ratios. In this and certain other illustrative examples, signal to noise threshold 253 is set at a level that indicates when backscatter light may include laser beams from other sources. These laser beams can be falsely interpreted as encountering an object at a particular location when an object may not be present.

In these examples, if the signal to noise ratio of the backscatter data is greater than the signal to noise threshold, the backscatter data is generated from the detection of a laser beam from another lidar system rather than actual backscatter light. In this case, the backscatter data does not actually provide data for the detection of an object but is the detection of the laser beam from another lidar system.

New wavelength configuration 237 can change the characteristics of laser beams 220 emitted by laser generators 206. Further, this new wavelength configuration can also be used to change the manner in which receivers 207 detect backscatter light 222. For example, receivers 207 can be reconfigured to detect backscatter light 222 generated in response to laser beams 220 using different wavelengths from the prior wavelength configuration. These reconfigurations can be performed by changing or adjusting filters in receivers 207 receiving backscatter light 222.

Thus, changes in backscatter light 222 having changes in wavelength resulting from changes to the wavelength used by laser beams 220 can be detected by receivers 207. As a result, the change in wavelength configuration 233 can result in the backscatter data 223 having a signal to noise ratio that is not greater than the signal to noise threshold. In other words, noise generated by laser beams from other lidar systems or sources are not present in backscatter data 223.

For example, an external laser beam having the same or similar wavelength as first laser beam 231 is detected by a receiver. This detection is used to generate first backscatter data 241. As a result of the detection of this external laser beam, the signal strength in first backscatter data 241 is sufficiently high such that first signal to noise ratio 251 is greater than signal to noise threshold 253, indicating that noise is present at a level that makes first backscatter data 241 unreliable for use in detecting objects.

By changing the wavelength of first laser beam 231 and the wavelength of first backscatter light 234 detected by receivers 207, first backscatter data 241 that is detected will not include the light from the external laser beam because the wavelength of first laser beam 231 is a different wavelength from the external laser beam.

In this and certain other illustrative examples, signal to noise threshold 253 is selected such that the quality of backscatter data 223 is sufficient for analysis to reduce errors. In some illustrative examples, signal to noise threshold 253 can be based on atmospheric conditions.

In these examples, atmospheric conditions describe the medium in which the emitted laser beam travels through. The laser beam bounces off of a surface (if one exists) and returns to the receiver through the same medium. The atmosphere contains particulates, which absorb and refract the laser beam and thus imparts noise. Thus, signal to noise ratio threshold 253 can be selected knowing current environment or atmospheric conditions and the noise these conditions cause in backscatter light 222. This noise occurs regardless of how accurate a lidar is or for any number of fail safes. The characterization is a baseline of expected noise to disregard in the received signal. In other illustrative examples, signal to noise threshold 253 can be based on atmospheric conditions and the speed at which platform 201 moves. For example, when platform 201 is an aircraft, the speed can be a taxiing speed of the aircraft. Dynamic motion, such as the movement of platform 201, increases noise in the first backscatter light 234 detected by lidar system 203. This noise is in part caused by the fact that the motion of the platform 201 will stir the atmospheric condition and create air vortices (or more particulate movement) which can cause noise.

In this and certain other illustrative examples, controller 214 can perform a number of operations 275 using first backscatter data 241 and second backscatter data 242. For example, when platform 201 is an aircraft, the number of operations 275 can be taxiing operation 276 for the aircraft using first backscatter data 241 and second backscatter data 242.

In this and certain other examples, the taxiing of an aircraft can include any movement of the aircraft on the ground using its propulsion system. Taxiing operation 276 can include at least one of reducing a taxiing speed of the aircraft, displaying a number of objects identified in the first backscatter data and the second backscatter data, generating an alert, or other suitable operations.

For example, when taxiing operations is an alert indicting the detection of an object, taxiing operation 276 can be used by an auto taxi system to control movement of an aircraft based on what objects are detected relative to the aircraft using first backscatter data 241 and second backscatter data 242. This backscatter data can be used to determine the location, size, and types of objects. These objects can be at least one of an aircraft, a baggage vehicle, a person, a gate, or some other object that may be relevant to controlling the movement of the aircraft. With this and certain other examples, sensor system 202 is part of aircraft taxi control system in which controller 214 that can perform taxiing operations

In these examples, operations 275 includes parameter determination 280. In this and certain other examples, parameter determination 280 comprises determining a number of parameters 285 for platform 201. This determination can be performed using backscatter data 223. These parameters can include at least one of a speed, a direction of travel, a temperature, air density, an angle of sideslip, an angle of attack, a presence of a group of objects, an atmospheric condition, aerosol particle concentration, aerosol properties, cloud properties, wind direction, an atmospheric temperature, or other parameters.

In other illustrative examples, the number of operations 275 can include inconsistency detection 281. At least one of first laser beam 231 or second laser beam 232 can be directed towards a surface of second platform 290. Controller 214 detects inconsistency 291 on surface 292 of second platform 290 using at least one of first backscatter data 241 or second backscatter data 242. This detection of inconsistency 291 can be used to initiate other operations such as maintenance, rework, or other operations.

In some illustrative examples, one or more technical solutions are present that overcome a technical problem with detecting objects when other lidar systems are in use in which the same or overlapping wavelengths are used. As a result, one or more technical solutions may provide a technical effect reducing the issue of detecting backscatter light that include light from laser beams from other sources such as lidar system in other aircraft. By changing the configuration, the quality of backscatter data 223 can be improved to enable more accurate performance of operations 275.

In this and certain other illustrative examples, the use of controller 214 in computer system 212 integrates processes into a practical application for generating backscatter data with the desired level of quality and using Backscatter data to perform operations with respect to a platform. These operations can include performing a taxiing operation, determining atmospheric conditions, determining parameters, detecting inconsistencies, and other types of operations.

For example, with taxiing, backscatter data 223 can be generated with a signal to noise ratio that provides sufficient information for performing autonomous taxiing of the aircraft in airports. This can be performed in a manner that reduces cost and increases passenger safety.

Controller 214 can reduce or avoid erroneous detection of obstacles by determining whether the signal level of backscatter data is above or below a desired signal to noise ratio threshold. For example, if the signal to noise ratio of backscatter data is above a signal to noise ratio threshold, then backscatter can be a laser beam from another lidar system in another aircraft. If the signal to noise ratio of the backscatter data is below a threshold, then the signal strength of the backscatter data is too low to be properly distinguished from noise.

The illustration of environment 200 in Figure 2 is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, a lidar sensor in lidar sensors 208 can include more than one laser generator and can also include more than one receiver in some illustrative examples. For example, a lidar sensor can have one laser generator and two receivers. In other examples, a lidar sensor can have three laser generators and three receivers. The particular number of laser generators and receivers used can depend on the ranges of wavelengths to be used by a particular lidar sensor.

In other illustrative examples, laser beams 220 can include a number of laser beams in addition to or in place of the first laser beam 231 and second laser beam 232. These laser beams can be emitted from front locations of platform 201 to enable selecting and generating backscatter data from different directions or locations relative to platform 201.

In still other illustrative examples, controller 214 can control the operation of lidar system 203 using other thresholds in addition to or in place of signal to noise threshold 253. This threshold is directed towards identifying a signal level that is sufficiently high such that backscatter light 222 being detected includes light from other laser beams such as other lidar systems.

For example, a second signal to noise threshold can also be used in which the signal to noise ratios should be greater than the second signal to noise threshold. This threshold can be used to indicate when the signal level of the laser beam detected in backscatter light 222 relative to the noise is high enough for processing. If the signal to noise ratios detected for backscatter light 222 fall below the second signal to noise threshold, other configuration changes can be performed. For example, power, intensity, laser type, number of laser beams, or other parameters can be changed to increase the signal strength of light from laser beams 220 detected in backscatter light 222. In other examples, adjustments can be made to receivers 207 to increase the signal to noise ratio. The adjustments can include increasing the sensitivity and resolution of the receiver

In yet other illustrative examples, the signal to noise ratios can be determined by receivers 207 and sent to controller 214. If two signal to noise ratios are used, such as signal to noise threshold 253 and a second signal to noise ratio, the signal to noise ratios determined for backscatter light 222 should fall within a range of signal to noise ratios with signal to noise threshold 253 being at one end and the second signal to noise threshold being at the second end. This level of the signal in the signal to noise ratios provides backscatter data 223 that has a desired level of accuracy or quality for performing operations 275.

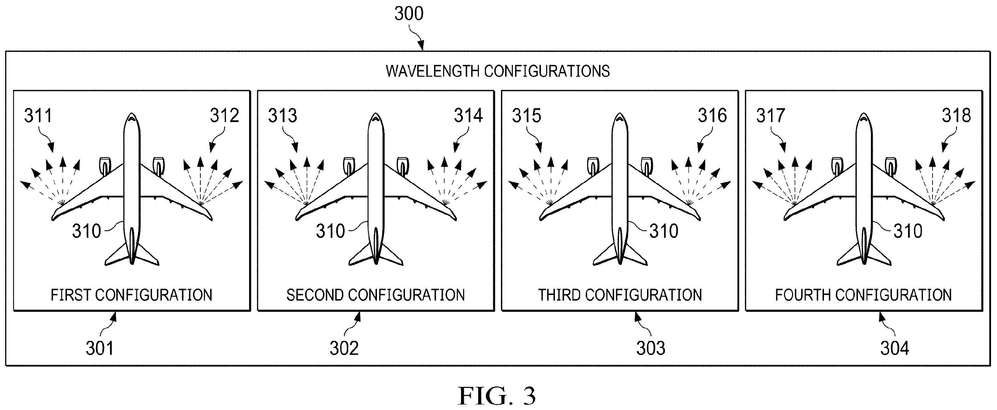

Turning now to Figure 3, an illustration of wavelength configurations for an aircraft is depicted in accordance with an illustrative example. As depicted, wavelength configurations 300 are shown for aircraft 310. Wavelength configurations 300 are an example of an implementation for wavelength configurations 289 in Figure 2. In this and certain other examples, four configurations are present in wavelength configurations 300 with the use of two lidar sensors and using two wavelengths for emission of laser beams. Wavelength configurations 300 comprises first configuration 301, second configuration 302, third configuration 303, and fourth configuration 304.

In this and certain other illustrative examples, aircraft 310 emits laser beams 311 and laser beams 312 in first configuration 301. Laser beams 311 have a first wavelength and laser beams 312 have a second wavelength. In second configuration 302, aircraft 310 emits laser beams 313 and laser beams 314. In this configuration, laser beams 313 have the second wavelength and laser beams 314 have the first wavelength.

Next in third configuration 303, aircraft 310 emits laser beams 315 and laser beams 316 with the first wavelength. Aircraft 310 emits laser beams 317 and laser beams 318 with the second wavelength and fourth configuration 304.

These wavelength configurations can be used during taxiing of aircraft 310 to detect objects such as other aircraft, vehicles, or people. Depending on the noise level from other lidar systems or laser sources, the wavelength configuration used by aircraft 310 can be switched from one wavelength configuration to another wavelength configuration in wavelength configurations 300 to mitigate the effects of light from other laser sources that may use the wavelengths of the lidar systems in aircraft 310.

In this and certain other examples, the process of using wavelength configurations 300 begins by identifying an aircraft taxiing speed for aircraft 310. A signal to noise threshold is determined based on atmospheric conditions for the taxiing speed identified for aircraft 310. These atmospheric conditions can include day, night, rain, fog, or other conditions that may affect the backscatter of laser beams.

A lidar system for aircraft 310 is operated using first configuration 301 in which different wavelengths are used for the laser beams. A signal to noise ratio is determined for backscatter light detected in response to laser beams 311 and a signal to noise ratio is determined for backscatter light detected in response to laser beams 312. If both signal to noise ratios are less than or equal to the signal to noise threshold, the process continues to operate the laser beams using the same configuration.

On the other hand, if the signal to noise ratio determined for both sets of laser beams are greater than the signal to noise threshold, aircraft 310 uses second configuration 302 in place of first configuration 301 to emit laser beams 313 and laser beams 314. In this case, the wavelengths used by the sets of laser beams are swapped between the two sets of laser beams.

In second configuration 302 if both signal to noise ratios are less than or equal to the signal to noise threshold, the process continues to operate the laser beams using the same configuration.

On the other hand, if the signal to noise ratio determined for both sets of laser beams are greater than the signal to noise threshold, aircraft 310 uses third configuration 303 is used in place of second configuration 302 to emit laser beams 315 and laser beams 316. In this case, the wavelengths used by the sets of laser beams are the same between the two sets of laser beams. In this case the laser beams use the first wavelength.

When operating aircraft 310 to emit laser beams 313 and laser beams 314 using third configuration 303, the signal to noise ratios are determined for backscatter light detected for each of these sets of laser beams. If the signal to noise ratios determined for the backscatter light for both sets of laser beams are less than or equal to the signal to noise threshold, the process continues to operate the laser beams using third configuration 303.

On the other hand, if the signal to noise ratio for both sets of laser beams are greater than the signal to noise threshold, aircraft 310 changes the wavelength configuration to use fourth configuration 304. In this and certain other examples, the wavelengths used by the two sets of laser beams are the same. In this and certain other examples, laser beams 317 and laser beams 318 both use the second wavelength.

While using fourth configuration 304, a signal to noise ratio for backscatter light detected in response to laser beams 317 and the signal to noise ratio for backscatter light detected in response to laser beams 318 are determined.

If the signal to noise ratio for both sets of laser beams is less than the signal to noise threshold using this configuration, aircraft 310 continues using fourth configuration 304. On the other hand, If the signal to noise ratio for both sets of laser beams are greater than the signal to noise threshold using this configuration, the taxiing speed of aircraft 310 is reduced. A new taxiing speed can be selected in a number of different ways. The new taxiing speed can be selected based on decreases that will improve the ability to make measurements. A new signal to noise threshold is determined for the new taxiing speed and the existing atmospheric conditions.

In this case, aircraft 310 then returns to using first configuration 301 and rotating through other configurations as described above. This process of rotating through different configurations and reducing taxiing speed can continue to make adjustments in the laser beams being emitted to take into account backscatter light that contains light from other laser beam sources having the same wavelength as one or both sets of laser beams being used by aircraft 310.

The illustration of wavelength configurations 300 and rotation of configurations described is provided as an example and not meant to limit the manner in which other illustrative examples can implement it. For example, other numbers of wavelength configurations can be used with other numbers of wavelengths. Further, other examples may use one or more sets of laser beams in addition to the two sets described in this illustrative example.

In yet other illustrative examples, the wavelength configuration can be changed in response to one of the signal to noise ratios being above the signal to noise threshold rather than both. For example, the wavelength configuration can be changed to adjust the wavelength for the laser beams in which the backscatter light detected as a signal to noise ratio greater than the signal to noise ratio threshold. In yet other illustrative examples, wavelength configurations 300 can be used in a different way from the one described. For example, second configuration 302 can be used before first configuration 301. In another example, fourth configuration 304 can be used before third configuration 303. In yet other illustrative examples, third and fourth wavelengths can be used in place of the first and second wavelengths in response to all four configurations being used and the signal to noise ratios still being greater than the signal to noise threshold.

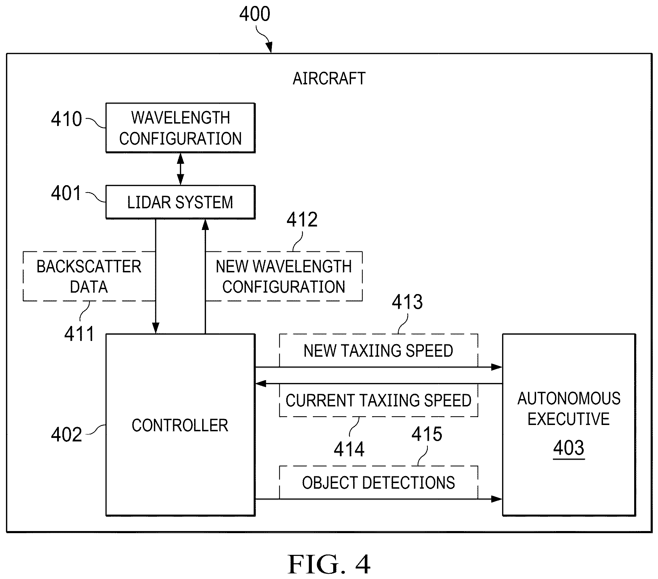

With reference now to Figure 4, an illustration of a block diagram of an aircraft employing a sensor system is depicted in accordance with an illustrative example. As depicted, the taxiing operations performed by aircraft for aircraft 400 is an example of implementation for components in aircraft 100 in Figure 1 and an example of an implementation for platform 201 in Figure 2. In this and certain other examples, aircraft 400 includes lidar system 401, controller 402, and autonomous executive 403.

In this and certain other examples, aircraft 400 can perform auto taxiing using lidar system 401, controller 402, and autonomous executive 403. These components can operation as an aircraft taxi control system. Lidar system 401 is an example of lidar system 203 in Figure 2. Controller 402 is an example of controller 214 in Figure 2.

Autonomous executive 403 includes hardware and software. This component includes processes for performing autonomous movement of aircraft 400 on the ground. For example, autonomous executive 403 can perform an auto taxi function. With the auto taxi function, autonomous executive 403 can provide fully autonomous taxiing, pilot assisted auto taxiing, other types of taxiing functions, and other types of non-taxiing pilot functions. In other examples, autonomous executive 403 can provide auto pushback, automated parking, and other types of automated ground operations.

In this and certain other illustrative examples, lidar system 401 emits laser beams and receives backscatter light in response to the laser beams using wavelength configuration 410. This wavelength configuration can be used to configure wavelengths for different lidar sensors in lidar system 401. The configuration of wavelengths can include the wavelength used by laser beams emitted from the sensors as well as the wavelengths for backscatter light detected by the sensors.

In this and certain other examples, lidar system 401 sends backscatter data 411 generated from detecting backscatter light generated in response to emitting laser beams to controller 402 for processing. Autonomous executive 403 sends current taxiing speed 414 to controller 402 for use in determining a signal to noise threshold to determine when a wavelength configuration change is needed.

In response, controller 402 determines whether signal to noise ratios for the signal strength in backscatter data 411 are greater than a threshold. If the signal strength is greater than a signal to noise threshold, controller 402 sends new wavelength configuration 412 to lidar system 401. In this and certain other examples, new wavelength configuration 412 can be an identification of the configuration or can include a number of wavelengths to be used by lidar system 401.

In response to receiving new wavelength configuration 412, lidar system 401 operates using new wavelength configuration 412 in place of wavelength configuration 410. Depending on what configurations have been used, controller 402 can send new taxiing speed 413 to autonomous executive 403. In this and certain other examples, sending new taxiing speed 413 is an example of taxiing operation 276 in operations 275 in Figure 2.

In this and certain other illustrative examples, controller 402 generates and sends object detections 415 to autonomous executive 403. Object detections 415 can be generated by analyzing backscatter data 411. This analysis can be performed using this backscatter data. These object detections are used by autonomous executive 403 to guide the movement of aircraft 400 in performing an auto taxi function to guide or move aircraft 400 on the ground.

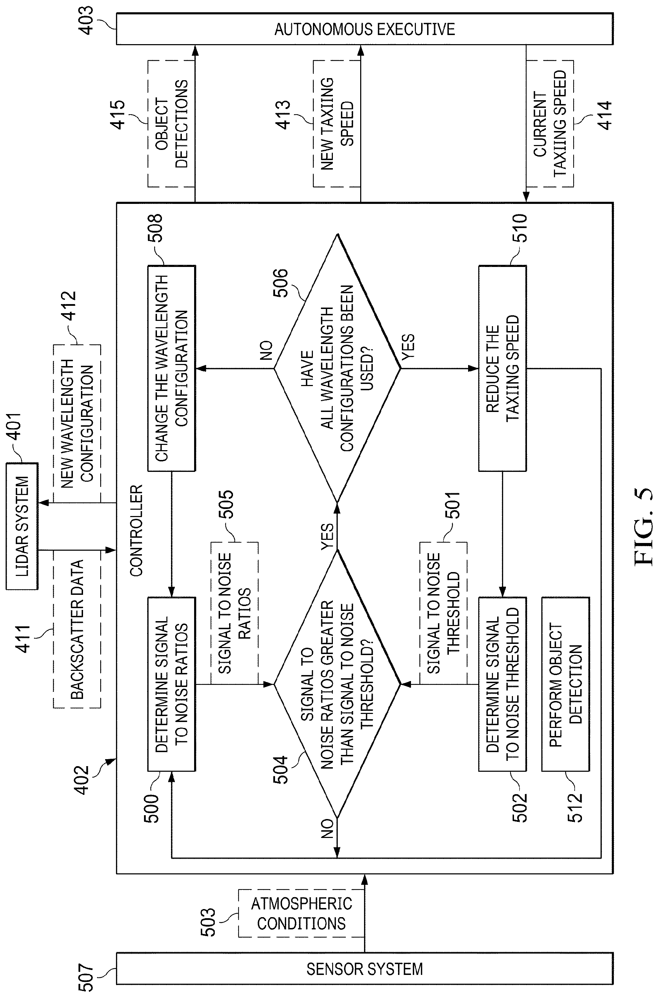

With reference next to Figure 5, an illustration of dataflow in a controller is depicted in accordance with an illustrative example. In the illustrative examples, the same reference numeral may be used in more than one figure. This reuse of a reference numeral in different figures represents the same element in the different figures.

In this and certain other examples, controller 402 determines signal to noise threshold 501 (operation 500). Signal to noise threshold 501 is determined in operation 500 using current taxiing speed 414 and atmospheric conditions 503.

In this and certain other examples, atmospheric conditions 503 are received from sensor system 507. Atmospheric conditions 503 can indicate conditions such as day, night, rain, fog, or other conditions that may affect the backscatter of laser beams. Sensors in sensor system 507 that detect these conditions can include at least one of an infrared sensor, a radar system, a humidity sensor, a temperature sensor, a rain detector, an ice detector, a wind sensor, and other suitable sensors.

In this and certain other examples, controller 402 also determines signal to noise ratios 505 (operation 502). Signal to noise ratios 505 are generated for the different backscatter data received in backscatter data 411 that is generated in response to the emission of laser beams.

Signal to noise ratios 505 are determined by controller 402 using backscatter data 411. In these and certain other examples, the signal to noise ratios 505 can be determined using the signal strength in backscatter data 411 and measurements of noise.

For example, measurements can be made by the lidar system without emitting laser beams. The backscatter detected when laser beams are not emitted can be used to determine the noise level. This noise level can include noise from circuits or hardware as well as environmental noise in the environment around the aircraft.

Controller 402 determines whether the signal to noise ratios 505 are greater than signal to noise threshold 501 (operation 504). If the signal to noise ratios are not greater than signal to noise threshold 501, the process returns to operation 502 to determine signal to noise ratios 505 for additional backscatter data.

If signal to noise ratios 505 are greater than signal to noise threshold 501, controller 402 determines whether all wavelength configurations have been used (operation 506). If not all of the wavelength configurations have been used, controller 402 changes the wavelength configuration (operation 508). The process returns to operation 502 to determine signal to noise ratios from backscatter data 411 received from lidar system 401. In operation 506, new wavelength configuration 412 identified from the different wavelength configurations is sent to lidar system 401.

With reference again to operation 506, if all of the wavelength configurations have been used, the process reduces the taxiing speed (operation 510). The process then returns to both operation 500 and operation 502. The taxiing speed determined in operation 510, is sent to autonomous executive 403 by controller 402 as new taxiing speed 413.

Additionally, controller 402 also performs object detection (operation 512). In operation 512, this object detection is performed using backscatter data 411 to detect objects. In this and certain other illustrative examples, object detection in operation 512 can be performed in a number of different ways.

For example, controller 402 can analyze backscatter data 411 to determine peaks in the signal strength of the backscatter light that indicate a presence of objects. These peaks can occur from reflections off the surface of the objects. Once the objects are identified, range calculation techniques can be used to determine the distance to the objects. These range calculation techniques can include time-of-flight (ToF) and frequency modulation continuous wave (FMCW).

As part of object detection in operation 512, dimensions of objects can be determined using clustering algorithms such as Density-Based Spatial Clustering of Applications with Noise (DBSCAN) or k-means to cluster points to identify object boundaries. Machine learning models can be used to identify object types from this information.

This and other information are used to generate object detections 415 are sent to autonomous executive 403. Autonomous executive 403 performs taxiing operations or other movements of aircraft 400 using these object detections. Thus, controller 402 processes backscatter data 411 generated by lidar system 401 and controls the configuration of wavelengths used by lidar system 401 in a manner that augments the quality of object detections 415 provided to autonomous executive 403. As a result, decisions made by autonomous executive 403 in performing various operations can be improved with this improvement in object detections 415.

The illustration of controller 402 in Figure 4 and Figure 5 are examples of one implementation for controller 214 in Figure 2. This illustration is not meant to limit the manner in which other illustrative examples can be implemented. For example, autonomous executive 403 can provide other functions for aircraft 400. Autonomous executive 403 can also operate during takeoff and flight in addition to taxiing of aircraft 400. For example, autonomous executive 403 can include autopilot functions and collision avoidance in which object detections 415 can be detections of other aircraft, birds, or other objects.

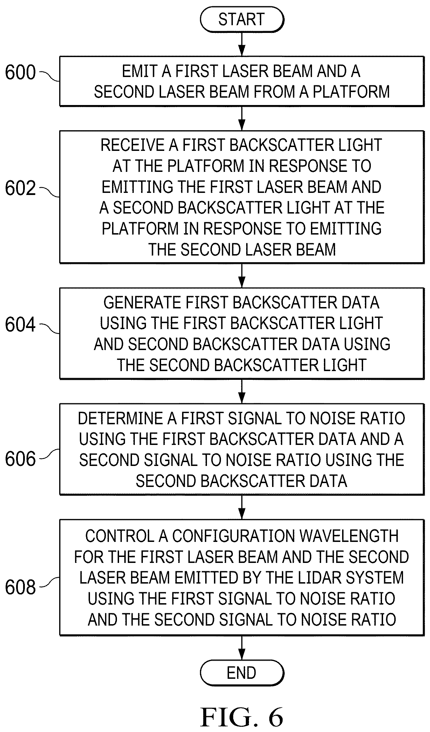

Turning next to Figure 6, an illustration of a flowchart of a process for controlling a lidar system is depicted in accordance with an illustrative example. The process in Figure 6 can be implemented in hardware, software, or both. When implemented in software, the process can take the form of program instructions that are run by one of more processor units located in one or more hardware devices in one or more computer systems. For example, the process can be implemented in sensor system 202 using lidar system 203 and controller 214 in computer system 212 in Figure 2.

The process emits a first laser beam and a second laser beam from a platform (operation 600). The process receives a first backscatter light at the platform in response to emitting the first laser beam and a second backscatter light at the platform in response to emitting the second laser beam (operation 602).

The process generates first backscatter data using the first backscatter light and second backscatter data using the second backscatter light (operation 604).

The process determines a first signal to noise ratio using the first backscatter data and a second signal to noise ratio using the second backscatter data (operation 606).

The process controls a configuration wavelength for the first laser beam and the second laser beam emitted by the lidar system using the first signal to noise ratio and the second signal to noise ratio (operation 608). The process terminates thereafter.

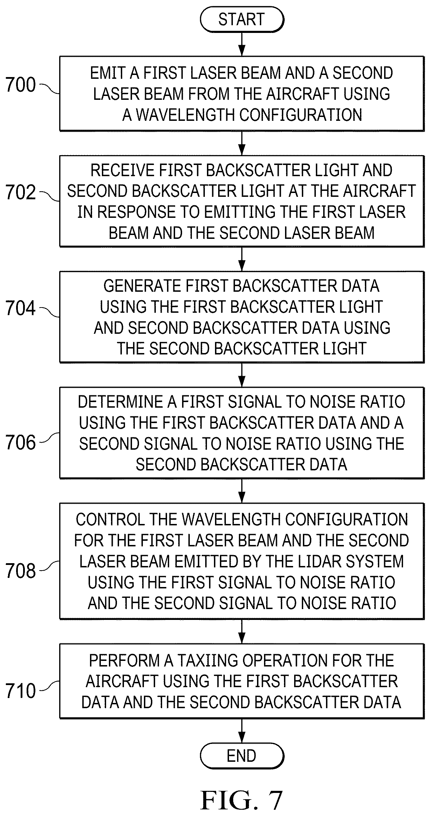

Turning next to Figure 7, an illustration of a flowchart of a process for controlling taxiing an aircraft is depicted in accordance with an illustrative example. The process in Figure 7 can be implemented in hardware, software, or both. When implemented in software, the process can take the form of program instructions that are run by one of more processor units located in one or more hardware devices in one or more computer systems. For example, the process can be implemented in sensor system 202 using lidar system 203 and controller 214 in computer system 212 in Figure 2.

The process emits a first laser beam and a second laser beam from the aircraft using a wavelength configuration (operation 700). The process receives first backscatter light and second backscatter light at the aircraft in response to emitting the first laser beam and the second laser beam (operation 702).

The process generates first backscatter data using the first backscatter light and second backscatter data using the second backscatter light (operation 704).

The process determines a first signal to noise ratio using the first backscatter data and a second signal to noise ratio using the second backscatter data (operation 706).

The process controls the wavelength configuration for the first laser beam and the second laser beam emitted by the lidar system using the first signal to noise ratio and the second signal to noise ratio (operation 708). In operation 708, the wavelength configuration can be changed for at least one of the first laser beam or the second laser beam in a manner that can avoid interference from laser beams originating from other sources. Further, the lidar system is also adjusted to detect backscatter light generated in response to the new wavelengths used by the laser beams. In other words, filters or other circuits in the receivers can be adjusted to filter or pass through backscatter light having wavelengths for the first laser beam and the second laser beam with the new wavelength configuration.

The process performs a taxiing operation for the aircraft using the first backscatter data and the second backscatter data (operation 710). The process terminates thereafter. In operation 710, the taxiing operation comprises at least one of reducing a taxiing speed of the aircraft, displaying a number of objects identified in the first backscatter data and the second backscatter data, and generating an alert.

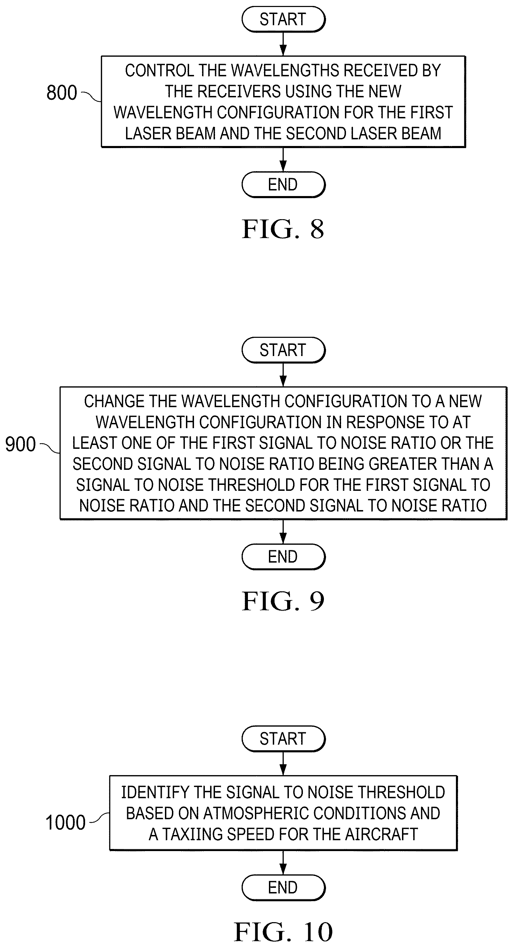

Turning next to Figure 8, an illustration of a flowchart of a process for controlling the wavelength configuration for receivers is depicted in accordance with an illustrative example. The process illustrated in this flowchart is an example of additional operations that can be performed by the operations in Figure 7.

The process controls the wavelengths received by the receivers using the new wavelength configuration for the first laser beam and the second laser beam (operation 800). The process terminates thereafter.

In operation 800, the new wavelength configuration can be selected from a first wavelength for the first laser beam and a second wavelength for the second laser beam; the second wavelength for the first laser beam and the first wavelength for the second laser beam; the first wavelength for the first laser beam and the first wavelength for the second laser beam; and the second wavelength for the first laser beam and the second wavelength for the second laser beam.

In operation 800, the process also adjusts the wavelengths of backscatter detected by the receivers. For example, one receiver can be adjusted to detect backscatter light having the range of wavelengths for the first laser beam. Another receiver can be adjusted to detect backscatter light having the range of wavelengths for the second laser beam. This detection can be adjusted by adjusting or using different filters to pass backscatter light to detectors in the receivers. In other examples, the change in wavelength can be detected by using a different receiver in place of the original receiver.

Turning next to Figure 9, an illustration of a flowchart of a process for controlling the wavelength configuration is depicted in accordance with an illustrative example. The process illustrated in this flowchart is an example of an implementation for operation 712 in Figure 7.

The process changes the wavelength configuration to a new wavelength configuration in response to at least one of the first signal to noise ratio or the second signal to noise ratio being greater than a signal to noise threshold for the first signal to noise ratio and the second signal to noise ratio (operation 900). The process terminates thereafter. In this operation, the change to the new wavelength configuration can be made in response to one or both of the signal to noise ratios being greater than the signal to noise threshold.

In this and certain other examples, when the signal to noise ratio is greater than the signal to noise threshold, the backscatter light is considered to include light from laser beams from other lidar systems or sources rather than light backscatter in response to laser beams emitted from the lidar system. This amount of light for other sources is considered to be great enough such that the determination of parameters, including detecting objects in the environment around the aircraft, cannot be made with the desired level of accuracy.

In operation 900, the signal to noise threshold for the first signal to noise ratio can be different from the signal to noise threshold used for the second signal to noise ratio. In other examples, the signal to noise threshold can be the same for both signal to noise ratios.

With reference now to Figure 10, an illustration of a flowchart of a process for controlling the wavelength configuration is depicted in accordance with an illustrative example. The process in this flowchart is an example of an additional operation that can be performed with the operations in Figure 9.

The process identifies the signal to noise threshold based on atmospheric conditions and a taxiing speed for the aircraft (operation 1000). The process terminates thereafter.

The flowcharts and block diagrams in the different depicted examples illustrate the architecture, functionality, and operation of some possible implementations of apparatuses and methods in an illustrative example. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative example, the function or functions noted in the blocks may occur out of the order noted in the figures. For example, in some cases, two blocks shown in succession may be performed concurrently or substantially concurrently, or the blocks may sometimes be performed in the reverse order, depending upon the functionality involved. Also, other blocks may be added in addition to the illustrated blocks in a flowchart or block diagram.

Thus, the sensor system in the illustrative examples can be applied to many different uses in addition to performing taxiing or other aircraft operations. For example, the illustrative examples can be applied to using a vehicle to detect inconsistencies in aircraft.

In this and certain other examples, a lidar system is connected to a vehicle. When one component is "connected" to another component, the connection is a physical connection. For example, a first component can be considered to be physically connected to a second component by at least one of being secured to the second component, bonded to the second component, mounted to the second component, welded to the second component, fastened to the second component, or connected to the second component in some other suitable manner. The first component can also be connected to the second component using a third component. The first component can also be considered to be physically connected to the second component by being formed as part of the second component, an extension of the second component, or both. In some examples, the first component can be physically connected to the second component by being located within the second component.

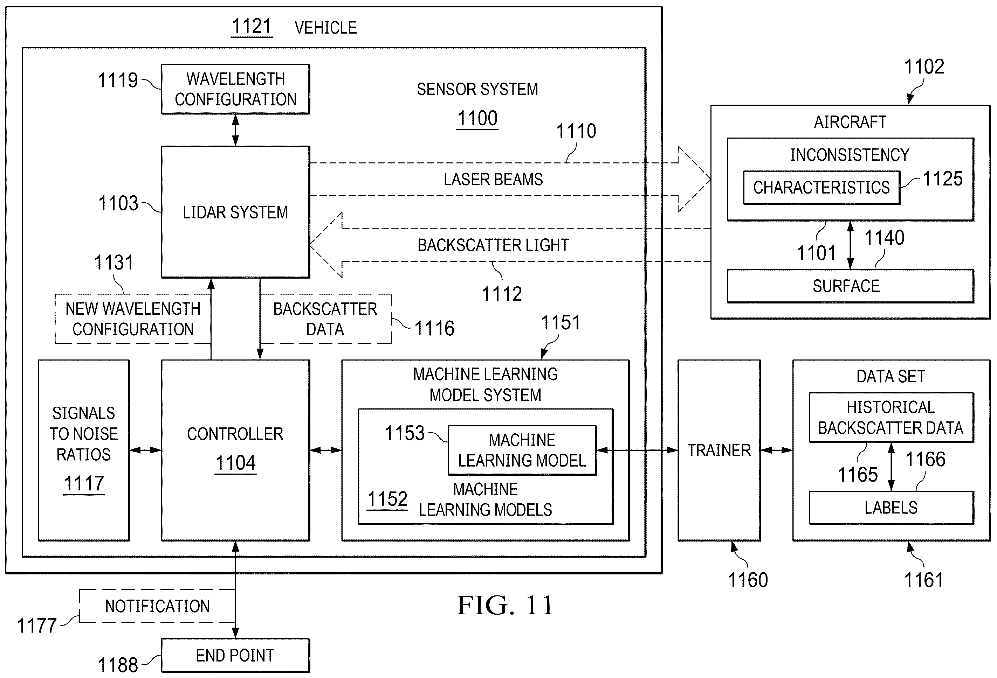

Turning now to Figure 11, an illustration of a block diagram depicting an inconsistency is depicted in accordance with an illustrative example. In this and certain other examples, sensor system 1100 operates to perform inconsistency detection to detect inconsistency 1101 on aircraft 1102.

As depicted, sensor system 1100 is located on vehicle 1121. In this and certain other examples, vehicle 1121 can take a number of different forms. For example, vehicle 1121 can be selected from a group comprising a mobile platform, an aircraft, a commercial airplane, a cargo airplane. a tilt-rotor aircraft, a tilt wing aircraft, a vertical takeoff and landing aircraft, an unmanned aerial vehicle, an artificial intelligence controlled vehicle, a drone, an electric vertical takeoff and landing vehicle, a personal air vehicle, a baggage cart, a personnel carrier, a train, a bus, and an automobile.

In this and certain other examples, sensor system 1100 comprises lidar system 1103 and controller 1104. Lidar system 1103 is an example of lidar system 203 in Figure 2. Controller 1104 is an example of controller 214 in Figure 2.

In this and certain other examples, controller 1104 controls lidar system 1103 to emit laser beams 1110. Laser beams 1110 can include a first laser beam and a second laser beam. In this and certain other examples, one or both of these laser beams can be directed at aircraft 1102. By directing one or more laser beams 1110 at aircraft 1102, an identification of what aircraft is being inspected using laser beams 1110 can be made. For example, a first laser beam in laser beams 1110 can be directed at aircraft 1102 and a second laser beam in laser beams 1110 be directed at another aircraft. In this manner, multiple aircraft can be inspected using laser beams 1110. Further, these inspections of aircraft 1102 and other aircraft can be made while the aircraft are stationary, moving, taxiing, or airborne.

Lidar system 1103 detects backscatter light 1112 in response to emitting laser beams 1110. In this and certain other examples, lidar system 1103 detects backscatter light 1112, which includes first backscatter light generated in response to the first laser beam and second backscatter light generated in response to the second laser beam in laser beams 1110.

This backscatter data 1116 is generated from backscatter light 1112. In this and certain other examples, backscatter data 1116 includes first backscatter data generated from first backscatter light and second backscatter data generated from second backscatter light.

Signal to noise ratios 1117 can be determined from backscatter data 1116. Signal to noise ratios 1117 can include a first signal to noise ratio based on the first backscatter data and a second signal to noise ratio based on the second backscatter data in backscatter data 1116.

These signal to noise ratios can be used by controller 1104 to control wavelength configuration 1119 for lidar system 1103. For example, controller 1104 can change wavelength configuration 1119 to new wavelength configuration 1131 in response to at least one of the first signal to noise ratio or the second signal to noise ratio being greater than a signal to noise threshold for the first signal to noise ratio and the second signal to noise ratio. In this case, controller 1104 can send new wavelength configuration 1131 to lidar system 1103 for use in place of wavelength configuration 1119. Changes in the configuration can be performed to decrease the signal to noise ratio level equal to or below the signal to noise threshold.

The signal to noise threshold, as in the other examples, is selected as one in which signal to noise ratios above that threshold indicate that backscatter light 1112 includes light from laser beams and not just from light scattered in response to laser beams 1110. In this manner, backscatter data 1116 is generated from backscatter light 1112 at a higher level of accuracy with respect to indicating light scattered in response to laser beams 1110.

In this and certain other illustrative examples, controller 1104 uses backscatter data 1116 to determine whether inconsistency 1101 is present on aircraft 1102. In this and certain other examples, inconsistency 1101 can be found on surface 1140 of aircraft 1102. In this and certain other examples, inconsistency 1101 selected from a group comprising an improperly installed part, an incorrect part, a missing part, an out of tolerance part, a missing rivet, a crack, a hole, missing paint, a scratch, rust, a dent, debris, a tool, ice, a liquid, dust, a mold, a plant, an insect, an animal, and other types of inconsistencies for aircraft 1102.

For example, controller 1104 first detects aircraft 1102 using at least one of the first backscatter data or the second backscatter data in backscatter data 1116. In other words, controller 1104 can determine whether backscatter data 1116 includes data generated for backscatter light 1112 reflecting off of surface 1140 of aircraft 1102. For example, backscatter light 1112 can comprise backscatter light from different locations in three-dimensional space. As a result, backscatter data 1116 can be for a point cloud that can be analyzed to determine whether aircraft 1102 is present.

Controller 1104 determines whether inconsistency 1101 is present on surface 1140 of aircraft 1102 using at least one of the first backscatter data and the second backscatter data in backscatter data 1116 in response to detecting aircraft 1102. Further, controller 1104 can determine a number of characteristics 1125 for inconsistency 1101 in response to determining that inconsistency 1101 is present on surface 1140 of aircraft 1102. In this and certain other examples, the number of characteristics 1125 can be selected from a group comprising at least one of dimensions, a shape, a location of inconsistency 1101, and characteristic for inconsistency 1101.

Further, characteristics 1125 can also include a determination whether inconsistency 1101 is out of tolerance. For example, if inconsistency 1101 is ice on surface 1140, the amount or extent of ice can determine whether the amount of ice is acceptable or out of tolerance for aircraft 1102. This amount or extent of ice for a characteristic in the number of characteristics 1125 can be used to determine whether a deicing operation may be needed.

In this and certain other examples, controller 1104 can send notification 1177 to endpoint 1188. Notification 1177 indicates the presence of inconsistency 1101. Further, notification 1177 can also include characteristics 1125.

In this and certain other examples, endpoint 1188 can be a computer, network, or other device. Endpoint 1188 performs actions based on receiving notification 1177. For example, when endpoint 1188 is for a maintenance system, maintenance can be scheduled to rework or eliminate inconsistency 1101. In other examples, endpoint 1188 can be a computer in aircraft 1102. In this manner, notification 1177 can be displayed to a pilot or other crew member in aircraft 1102. This notification can be used by the pilot or other crew member to take appropriate actions.

In these and certain other examples, controller 1104 uses machine learning model system 1151 to detect aircraft 1102, determine whether inconsistency 1101 is present on surface 1140 of aircraft 1102, and determine number of characteristics 1125 of inconsistency 1101. Machine learning model system 1151 is comprised of a number of machine learning models 1152. In this and certain other examples, machine learning models 1152 in machine learning model system 1151 is comprised of at least one of an artificial neural network, a convolutional neural network, a generative adversarial network (GAN), a sequence to sequence model, a variation auto encoder, a decision tree, a support vector machine, a regression machine learning model, a classification machine learning model, a random forest learning model, a Bayesian network, a genetic algorithm, and other types of models.

In this and certain other illustrative examples, machine learning models 1152 in machine learning model system 1151 can be trained by trainer 1160. For example, trainer 1160 can train machine learning model 1153 in machine learning model system 1151 using data set 1161. In this and certain other examples, data set 1161 comprises historical backscatter data 1165 with inconsistencies on aircraft and labels 1166 associated with the historical backscatter data in which labels 1166 identify the inconsistency type for the inconsistencies. Labels 1166 can also identify other characteristics and characteristics 1125 in addition to inconsistency type.

In these and certain other examples, backscatter data 1116 generated by lidar system 1103 and backscatter data generated by other lidar systems generating backscatter data from backscatter light 1112 received from aircraft 1102 and other aircraft can be saved as part of historical backscatter data 1165. Further, historical backscatter data 1165 can also include backscatter data generated from backscatter light resulting from laser beams hitting test samples or test coupons in which inconsistencies are present. Further, historical backscatter data 1165 can also be generated from simulations of lidar systems emitting laser beams and detecting backscatter light from inconsistencies.

The illustration of sensor system 1100 in Figure 11 is provided as one example of an indentation of a sensor system for detecting inconsistencies in aircraft. This illustrative example is not meant to limit the manner in which other illustrative examples can be implemented. For example, lidar system 1103 and controller 1104 can be distributed components that may be located in one or more vehicles in addition to vehicle 1121. For example, lidar system 1103 can be comprised of multiple lidar sensors such as lidar sensors 208 in Figure 2 in which each of the lidar sensors can be located in different vehicles such as different aircraft. These aircraft can move to different positions relative to aircraft 1102 and each of the lidar sensors can generate backscatter data 1116.

Further, controller 1104 can be a distributed process in which a portion of controller 1104 can be co-located with each of the lidar sensors. These different portions can be described as controller units that collectively form controller 1104. Each of these controller units analyzed backscatter data 1116 from the different lidar sensors and lidar system 1103 to detect inconsistencies and determine characteristics of those inconsistencies separately from other lidar sensors. These different detections can then be aggregated in one of the controller units. These aggregated detections can then be sent to endpoint 1188 for processing.

Further, when multiple lidar sensors are present in different locations, the detections from these different sensors can be cross checked to ensure that a correct or accurate detection of inconsistencies is performed. For example, the backscatter data from many different lidar sensors can be used to generate multiple point clouds. These point clouds can then be aligned into a unified cloud system and synchronized in time. With this synchronization of point clouds, redundancy can be present to confirm detections of inconsistencies and filter out false positives. With these different perspectives, a more accurate and complete view of inconsistencies that may be present on aircraft 1102 can be generated. This type of analysis of the point clouds can be performed using one or more of machine learning models 1152 in machine learning model system 1151. One of the machine learning models can be trained to correlate point clouds while one or more other machine learning models can be trained to detect inconsistencies.

In other examples, the detection can be performed by controller 1104 without machine learning model system 1151. For example, controller 1104 can include processes based on the field of view (FOV) of lidars and their position on the aircraft. Controller 1104 can then apply the transforms taking into account the geometry of the aircraft to superimpose any common points on top of each other. Overlaps can confirm the presence of inconsistency 1101. Controller 1104 can then send notification 1177.

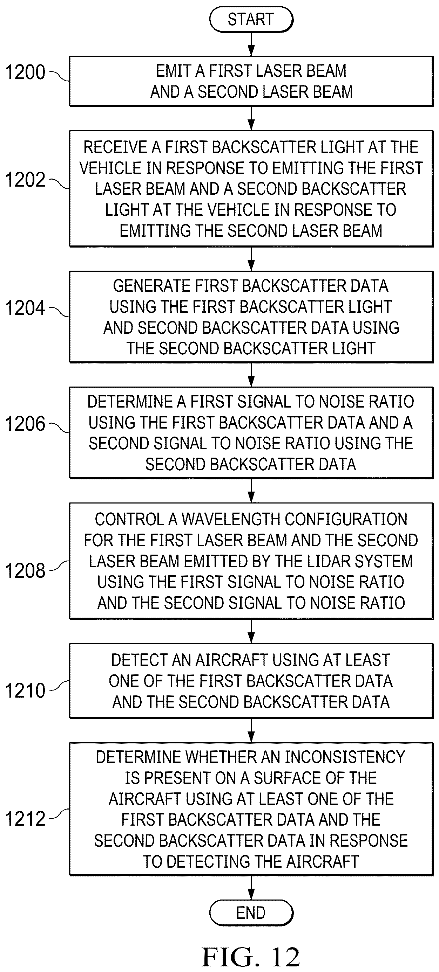

Turning now to Figure 12, an illustration of a flowchart of a process for detecting an inconsistency is depicted in accordance with an illustrative example. The process in Figure 12 can be implemented in hardware, software, or both. When implemented in software, the process can take the form of program instructions that are run by one of more processor units located in one or more hardware devices in one or more computer systems. For example, the process can be implemented in sensor system 202 using lidar system 203 and controller 214 in computer system 212 in Figure 2 and in sensor system 1100 using lidar system 1103 and controller 1104 as shown in Figure 11.

The process begins by emitting a first laser beam and a second laser beam (operation 1200). The process receives a first backscatter light at the vehicle in response to emitting the first laser beam and a second backscatter light at the vehicle in response to emitting the second laser beam (operation 1202). The process generates first backscatter data using the first backscatter light and second backscatter data using the second backscatter light (operation 1204).

The process determines a first signal to noise ratio using the first backscatter data and a second signal to noise ratio using the second backscatter data (operation 1206). The process controls a wavelength configuration for the first laser beam and the second laser beam emitted by the lidar system using the first signal to noise ratio and the second signal to noise ratio (operation 1208).

The process detects an aircraft using at least one of the first backscatter data and the second backscatter data (operation 1210). The process determines whether an inconsistency is present on a surface of the aircraft using at least one of the first backscatter data and the second backscatter data in response to detecting the aircraft (operation 1212). The process terminates thereafter.

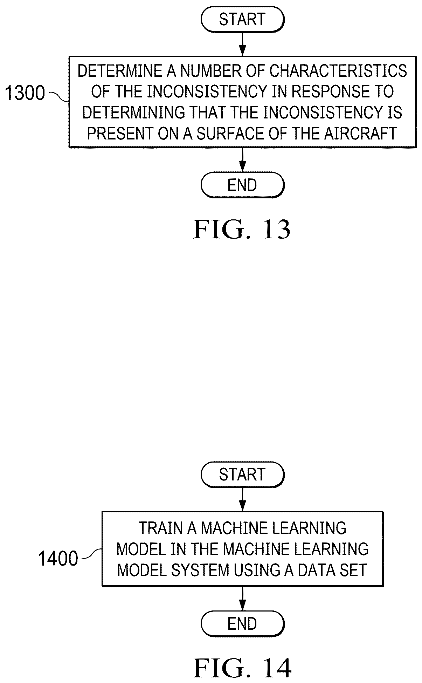

Next in Figure 13, an illustration of a flowchart of a process for determining characteristics of an inconsistency is depicted in accordance with an illustrative example. The process in this illustrative example is an example of an additional intention that can be performed with the operations in Figure 12.

The process determines a number of characteristics of the inconsistency in response to determining that the inconsistency is present on a surface of the aircraft (operation 1300). The process terminates thereafter. In operation 1300, a number of characteristics is selected from a group comprising at least one of dimensions, a shape, a location of the inconsistency or some other characteristic.

With reference now Figure 14, an illustration of a flowchart of a process for training a machine learning model in a machine learning model system to detect inconsistencies is depicted in accordance with an illustrative example. The process in Figure 14 can be implemented in hardware, software, or both. When implemented in software, the process can take the form of program instructions that are run by one of more processor units located in one or more hardware devices in one or more computer systems. The process in this illustrative example can be performed by a trainer such as trainer 1160 in Figure 11.

The process trains a machine learning model in the machine learning model system using a data set (operation 1400). The process terminates thereafter. In operation 1400, the data set comprises historical backscatter data with inconsistencies on aircraft and labels associated with the historical backscatter data in which the labels identify the inconsistency type for the inconsistencies.

Some features of the illustrative examples are described in the following clauses. These clauses are examples of features and are not intended to limit other illustrative examples.

Clause 1. An aircraft inspection system comprising:
a vehicle;
a lidar system connected to the vehicle, wherein the lidar system is configured to perform operations comprising:
   emitting a first laser beam and a second laser beam in a two lidar configuration system;
   receiving a first backscatter light at the vehicle in response to emitting the first laser beam and a second backscatter light at the vehicle in response to emitting the second laser beam; and
   generating first backscatter data using the first backscatter light and second backscatter data using the second backscatter light; and
a controller configured to perform operations comprising:
   determining a first signal to noise ratio using the first backscatter data and a second signal to noise ratio using the second backscatter data;
   controlling a wavelength configuration for the first laser beam and the second laser beam emitted by the lidar system using the first signal to noise ratio and the second signal to noise ratio;
   detecting an aircraft using at least one of the first backscatter data or the second backscatter data; and
   determining whether an inconsistency is present on a surface of the aircraft using at least one of the first backscatter data or the second backscatter data in response to detecting the aircraft.

Clause 2. The aircraft inspection system of clause 1, wherein the inconsistency is selected from a group comprising an improperly installed part, an incorrect part, a missing part, an out of tolerance part, a missing rivet, a crack, a hole, missing paint, a scratch, rust, a dent, debris, a tool, ice, a liquid, dust, mold, a plant, an insect, and an animal.

Clause 3. The aircraft inspection system of clause 1 or 2, wherein the controller is configured to perform the operations further comprising: determining a number of characteristics of the inconsistency in response to determining that the inconsistency is present on a surface of the aircraft.

Clause 4. The aircraft inspection system of any of clauses 1 to 3, wherein the number of characteristics is selected from a group comprising at least one of dimensions, a shape or a location of the inconsistency.

Clause 5. The aircraft inspection system of clause 3 or 4, wherein the controller uses a machine learning model system to detect the aircraft; determine whether the inconsistency is present on the surface of aircraft; and determine the number of characteristics of the inconsistency.

Clause 6. The aircraft inspection system of clause 5, wherein machine learning model system comprises at least one of an artificial neural network, a convolutional neural network, a generative adversarial network (GAN), a sequence to sequence model, a variation auto encoder, a decision tree, a support vector machine, a regression machine learning model, a classification machine learning model, a random forest learning model, a Bayesian network, a genetic algorithm, and other types of models.

Clause 7. The aircraft inspection system of any of clauses 1 to 6, wherein controlling the wavelength configuration comprises: changing the wavelength configuration to a new wavelength configuration in response to at least one of the first signal to noise ratio or the second signal to noise ratio being greater than a signal to noise threshold for the first signal to noise ratio and the second signal to noise ratio.

Clause 8. The aircraft inspection system of clause 7, wherein the new wavelength configuration is selected from a first wavelength for the first laser beam and a second wavelength for the second laser beam; the second wavelength for the first laser beam and the first wavelength for the second laser beam; the first wavelength for the first laser beam and the first wavelength for the second laser beam; and the second wavelength for the first laser beam and the second wavelength for the second laser beam.

Clause 9. The aircraft inspection system of any of clauses 1 to 8 further comprising: a data set comprising historical backscatter data with inconsistencies on aircraft and labels associated with the historical backscatter data in which the labels identify the inconsistency type for the inconsistencies; and a trainer configured to perform the operations comprising training a machine learning model in the machine learning model system using the data set.

Clause 10. The aircraft inspection system of any of clauses 1 to 9, wherein the first laser beam and the second laser beam are selected from a group comprising a continuous laser beam and a pulsed laser beam.

Clause 11. The aircraft inspection system of any of clauses 1 to 10, wherein the lidar system comprises at least one of an optical phased array lidar, rotating lidar, mems lidar, coherent lidar, direct detection lidar, pulsed lidar, or a continuous wave lidar.

Clause 12. A method for detecting an inconsistency, the method comprising:
emitting a first laser beam and a second laser beam;
receive a first backscatter light at the vehicle in response to emitting the first laser beam and a second backscatter light at the vehicle in response to emitting the second laser beam;
generating first backscatter data using the first backscatter light and second backscatter data using the second backscatter light; and
determining a first signal to noise ratio using the first backscatter data and a second signal to noise ratio using the second backscatter data;
controlling a wavelength configuration for the first laser beam and the second laser beam emitted by lidar system using the first signal to noise ratio and the second signal to noise ratio;
detecting an aircraft using at least one of the first backscatter data or the second backscatter data; and
determining whether the inconsistency is present on a surface of the aircraft using at least one of the first backscatter data or the second backscatter data in response to detecting the aircraft.

Clause 13. The method of clause 12, wherein the inconsistency is selected from a group comprising an improperly installed part, an incorrect part, a missing part, an out of tolerance part, a missing rivet, a crack, a hole, missing paint, a scratch, rust, a dent, debris, a tool, ice, a liquid, dust, a mold, a plant, an insect, and an animal.

Clause 14. The method of clause 12 or 13 further comprising:
determining a number of characteristics of the inconsistency in response to determining that the inconsistency is present on a surface of the aircraft.

Clause 15. The method of any of clauses 12 to 14, wherein the number of characteristics is selected from a group comprising at least one of dimensions, a shape or a location of the inconsistency.

Clause 16. The method of clause 14 or 15, wherein the controller uses a machine learning model system to detect the aircraft; determine whether the inconsistency is present on the surface of aircraft and determine the number of characteristics of the inconsistency.

Clause 17. The method of clause 16, wherein the machine learning model system comprises at least one of an artificial neural network, a convolutional neural network, a generative adversarial network (GAN), a sequence to sequence model, a variation auto encoder, a decision tree, a support vector machine, a regression machine learning model, a classification machine learning model, a random forest learning model, a Bayesian network, a genetic algorithm, and other types of models.

Clause 18. The method of any of clauses 12 to 17, wherein controlling the wavelength comprises: changing the wavelength configuration to a new wavelength configuration in response to at least one of the first signal to noise ratio or the second signal to noise ratio being greater than a signal to noise threshold for the first signal to noise ratio and the second signal to noise ratio.

Clause 19. The method of clause 18, wherein the new wavelength configuration is selected from a first wavelength for the first laser beam and a second wavelength for the second laser beam; the second wavelength for the first laser beam and the first wavelength for the second laser beam; the first wavelength for the first laser beam and the first wavelength for the second laser beam; and the second wavelength for the first laser beam and the second wavelength for the second laser beam.

Clause 20. The method of any of clauses 12 to 19 further comprising: training a machine learning model in the machine learning model system using a data set comprising historical backscatter data with inconsistencies on aircraft and labels associated with the historical backscatter data in which the labels identify the inconsistency type for the inconsistencies.

Clause 21. The method of any of clauses 12 to 20, wherein the first laser beam and the second laser beam are selected from a group comprising a continuous laser beam and a pulsed laser beam.

Clause 22. The method of any of clauses 12 to 21, wherein the lidar system comprises at least one of an optical phased array lidar, rotating lidar, mems lidar, coherent lidar, direct detection lidar, pulsed lidar, or a continuous wave lidar.

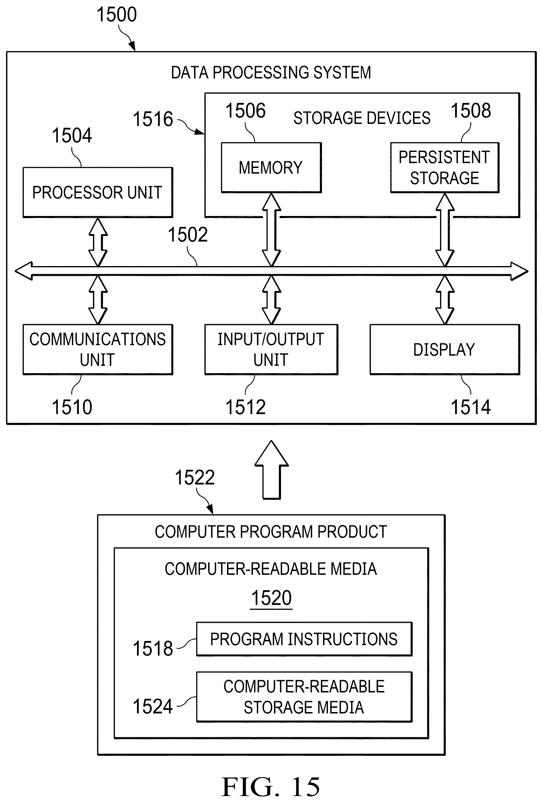

Turning now to Figure 15, an illustration of a block diagram of a data processing system is depicted in accordance with an illustrative example. Data processing system 1500 can be used to computer system 212 in Figure 2. In this and certain other illustrative examples, data processing system 1500 includes communications framework 1502, which provides communications between processor unit 1504, memory 1506, persistent storage 1508, communications unit 1510, input/output (I/O) unit 1512, and display 1514. In this and certain other examples, communications framework 1502 takes the form of a bus system.

Processor unit 1504 serves to execute instructions for software that can be loaded into memory 1506. Processor unit 1504 includes one or more processors. For example, processor unit 1504 can be selected from at least one of a multicore processor, a central processing unit (CPU), a graphics processing unit (GPU), a physics processing unit (PPU), a digital signal processor (DSP), a network processor, or some other suitable type of processor. Further, processor unit 1504 can be implemented using one or more heterogeneous processor systems in which a main processor is present with secondary processors on a single chip. As another illustrative example, processor unit 1504 can be a symmetric multi-processor system containing multiple processors of the same type on a single chip.

Memory 1506 and persistent storage 1508 are examples of storage devices 1516. A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices 1516 may also be referred to as computer-readable storage devices in these and certain other illustrative examples. Memory 1506, in these and certain other examples, can be, for instance, a random-access memory or any other suitable volatile or non-volatile storage device. Persistent storage 1508 may take various forms, depending on the particular implementation.

For example, persistent storage 1508 may contain one or more components or devices. For example, persistent storage 1508 can be a hard drive, a solid-state drive (SSD), a flash memory, a rewritable optical disk, a rewritable magnetic tape, or some combination of the above. The media used by persistent storage 1508 also can be removable. For example, a removable hard drive can be used for persistent storage 1508.

Communications unit 1510, in these illustrative examples, provides for communications with other data processing systems or devices. In these illustrative examples, communications unit 1510 is a network interface card.

Input/output unit 1512 allows for input and output of data with other devices that can be connected to data processing system 1500. For example, input/output unit 1512 may provide a connection for user input through at least one of a keyboard, a mouse, or some other suitable input device. Further, input/output unit 1512 may send output to a printer. Display 1514 provides a mechanism to display information to a user.

Instructions for at least one of the operating system, applications, or programs can be located in storage devices 1516, which are in communication with processor unit 1504 through communications framework 1502. The processes of the different examples can be performed by processor unit 1504 using computer-implemented instructions, which may be located in a memory, such as memory 1506.

These instructions are referred to as program instructions, computer usable program instructions, or computer-readable program instructions that can be read and executed by a processor in processor unit 1504. The program instructions in the different examples can be embodied on different physical or computer-readable storage media, such as memory 1506 or persistent storage 1508.

Program instructions 1518 are located in a functional form on computer-readable media 1520 that is selectively removable and can be loaded onto or transferred to data processing system 1500 for execution by processor unit 1504. Program instructions 1518 and computer-readable media 1520 form computer program product 1522 in these illustrative examples. In this and certain other illustrative examples, computer-readable media 1520 is computer-readable storage media 1524.

Computer-readable storage media 1524 is a physical or tangible storage device used to store program instructions 1518 rather than a medium that propagates or transmits program instructions 1518. Computer-readable storage media 1524 may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer-readable storage media 1524, as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation or garbage collection. However, these operations do not render the storage device as transitory because the data is not transitory while the data is stored in the storage device.

Alternatively, program instructions 1518 can be transferred to data processing system 1500 using a computer-readable signal media. The computer-readable signal media are signals and can be, for example, a propagated data signal containing program instructions 1518. For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media 1520" can be singular or plural. For example, program instructions 1518 can be located in computer-readable media 1520 in the form of a single storage device or system. In other examples, program instructions 1518 can be located in computer-readable media 1520 that is distributed in multiple data processing systems. In other words, some instructions in program instructions 1518 can be located in one data processing system while other instructions in program instructions 1518 can be located in one data processing system. For example, a portion of program instructions 1518 can be located in computer-readable media 1520 in a server computer while another portion of program instructions 1518 can be located in computer-readable media 1520 located in a set of client computers.

The different components illustrated for data processing system 1500 are not meant to provide architectural limitations to the manner in which different examples can be implemented. In some illustrative examples, one or more of the components may be incorporated in or otherwise form a portion of, another component. For example, memory 1506, or portions thereof, may be incorporated in processor unit 1504 in some illustrative examples. The different illustrative examples can be implemented in a data processing system including components in addition to or in place of those illustrated for data processing system 1500. Other components shown in Figure 15 can be varied from the illustrative examples shown. The different examples can be implemented using any hardware device or system capable of running program instructions 1518.

Thus, the illustrative examples provided a method, apparatus, system, and computer program product for controlling a lidar system to perform various operations. In the illustrative examples, the wavelength configurations of the lidar systems can be changed to reduce issues caused by interference in detecting light from laser beams originating from other sources.

In some illustrative examples, a method controls taxiing of an aircraft. A first laser beam and a second laser beam are emitted from the aircraft using a wavelength configuration. A first backscatter light and a second backscatter light are received at the aircraft in response to emitting the first laser beam and the second laser beam. First backscatter data is generated using the first backscatter light. Second backscatter data is generated using the second backscatter light. A first signal to noise ratio is determined using the first backscatter data. A second signal to noise ratio is determined using the second backscatter data. The wavelength configuration is controlled for the first laser beam and the second laser beam emitted by lidar system using the first signal to noise ratio and the second signal to noise ratio. A taxiing operation is performed for the aircraft using the first backscatter data and the second backscatter data.

As a result, erroneous detection of objects caused by light from laser beams or other sources that have the same wavelength or overlapping wavelengths of the laser beam emitted from a lidar system can be avoided.

The description of the different illustrative examples has been presented for purposes of illustration and description and is not intended to be exhaustive or limited to the examples in the form disclosed. The different illustrative examples describe components that perform actions or operations. In some illustrative examples, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

Some features of the illustrative examples are described in the following clauses. These clauses are examples of features and are not intended to limit other illustrative examples.

A1. An aircraft (100, 400) taxi control system comprising:
a lidar system (203, 401) configured to perform operations comprising:
emitting a first laser beam (231) and a second laser beam (232) from an aircraft (100, 400) using a wavelength configuration (233);
receiving a first backscatter light (234) and a second backscatter light (235) at the aircraft (100, 400) in response to emitting the first laser beam (231) and the second laser beam (232);
generating first backscatter data (241) using the first backscatter light (234) and second backscatter data (242) using the second backscatter light (235);
a controller (214, 402) configured to perform operations comprising:
   determining a first signal to noise ratio (251) using the first backscatter data (241) and a second signal to noise ratio (252) using the second backscatter data (242);
   controlling the wavelength configuration (233) for the first laser beam (231) and the second laser beam (232) emitted by the lidar system (203, 401) using the first signal to noise ratio (251) and the second signal to noise ratio (252); and
   performing a taxiing operation (276) for the aircraft (100, 400) using the first backscatter data (241) and the second backscatter data (242).

A2. The aircraft (100, 400) taxi control system of clause A1, wherein the taxiing operation (276) comprises at least one of reducing a taxiing speed of the aircraft (100, 400), displaying a number of objects identified in the first backscatter data (241) and the second backscatter data (242), generating an alert.

A3. The aircraft (100, 400) taxi control system of clause A1 or A2, wherein controlling the wavelength configuration (233) comprises:
changing (900) the wavelength configuration (233) to a new wavelength configuration (233) in response to at least one of the first signal to noise ratio (251) or the second signal to noise ratio (252) being greater than a signal to noise threshold (253, 501) for the first signal to noise ratio (251) and the second signal to noise ratio (252).

A4. The aircraft (100, 400) taxi control system of clause A3, wherein in controlling the wavelength configuration (233) comprises:
identifying (1000) the signal to noise threshold (253, 501) based on atmospheric conditions and a taxiing speed for the aircraft (100, 400).

A5. The aircraft (100, 400) taxi control system of clause A3 or A4, wherein the new wavelength configuration (233) is selected from a first wavelength for the first laser beam (231) and a second wavelength for the second laser beam (232); the second wavelength for the first laser beam (231) and the first wavelength for the second laser beam (232); the first wavelength for the first laser beam (231) and the first wavelength for the second laser beam (232); and the second wavelength for the first laser beam (231) and the second wavelength for the second laser beam (232).

A6. The aircraft (100, 400) taxi control system of any of clauses A3 to A5, wherein the new wavelength configuration (233) is a first wavelength for the first laser beam (231) and a second wavelength for the second laser beam (232).

A7. The aircraft (100, 400) taxi control system of any of clauses A1 to A6, wherein the lidar system (203, 401) comprises at least one of an optical phased array lidar, rotating lidar, mems lidar, coherent lidar, direct detection lidar, pulsed lidar, or a continuous wave lidar.

A8. The aircraft taxi control system of any of clauses A1 to A7, wherein the aircraft (100, 400) is selected from a group comprising a commercial airplane, a cargo airplane, a tilt-rotor aircraft, a tilt wing aircraft, a vertical takeoff and landing aircraft, a rotorcraft, an unmanned aerial vehicle, an artificial intelligence controlled aircraft, a drone, an electric vertical takeoff and landing vehicle, a personal air vehicle, and a spaceplane.

A9. A sensor system comprising:
a lidar system (203, 401) configured to perform operations comprising:
emitting a first laser beam (231) from a platform and a second laser beam (232) from the platform;
receiving a first backscatter light (234) at the platform in response to emitting the first laser beam (231) and a second backscatter light (235) at the platform in response to emitting the second laser beam (232);
generating first backscatter data (241) using the first backscatter light (234) and second backscatter data (242) using the second backscatter light (235); and
a controller (214, 402) configured to perform operations comprising:
   determining a first signal to noise ratio (251) using the first backscatter data (241) and a second signal to noise ratio (252) using the second backscatter data (242); and
   controlling a wavelength configuration (233) for the first laser beam (231) and the second laser beam (232) emitted by the lidar system (203, 401) using the first signal to noise ratio (251) and the second signal to noise ratio (252).

A10. The sensor system of clause A9, wherein controlling the wavelength configuration (233) comprises:
changing the wavelength configuration (233) to a new wavelength configuration (233) in response to at least one of the first signal to noise ratio (251) or the second signal to noise ratio (252) being greater than a signal to noise threshold (253, 501) for the first signal to noise ratio (251) and the second signal to noise ratio (252).

A11. The sensor system of clause A10, wherein controlling the wavelength configuration (233) comprises:
identifying the signal to noise threshold (253, 501) based on atmospheric conditions.

A12. The sensor system of clause A10 or A11, wherein the platform is an aircraft (100, 400), and wherein in controlling the wavelength configuration (233), the controller (214, 402) is configured to:
identify the signal to noise threshold (253, 501) based on atmospheric conditions and a taxiing speed for the aircraft (100, 400).

A13. The sensor system of any of clauses A9 to A12, wherein the platform is an aircraft (100, 400) and wherein the controller (214, 402) is configured to:
perform a taxiing operation (276) for the aircraft (100, 400) using the first backscatter data (241) and the second backscatter data (242).

A14. The sensor system of clause A13, wherein the taxiing operation (276) comprises at least one of reducing a taxiing speed of the aircraft (100, 400), displaying a number of objects identified in the first backscatter data (241) and the second backscatter data (242), or generating an alert.

A15. The sensor system of any of clauses A9 to A14, wherein the controller (214, 402) is configured to determine a number of parameters for the platform.

A16. The sensor system of clause A15, wherein the number of parameters is selected from at least one of a speed, a direction of travel, a temperature, air density, an angle of sideslip, an angle of attack, a presence of a group of objects, an atmospheric condition, aerosol particle concentration, aerosol properties, cloud properties, wind direction, or an atmospheric temperature.

A17. The sensor system of any of clauses A9 to A16, wherein the at least one of the first laser beam (231) or the second laser beam (232) are directed towards a surface of a second platform and wherein the controller (214, 402) is configured to:
detect an inconsistency on a surface of the second platform using at least one of the first backscatter data (241) or the second backscatter data (242).

A18. The sensor system of any of clauses A9 to A17, wherein the lidar system (203, 401) comprises at least one of an optical phased array lidar, rotating lidar, mems lidar, coherent lidar, direct detection lidar, pulsed lidar, or a continuous wave lidar.

A19. The sensor system of any of clauses A9 to A18, wherein the platform is selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, an artificial intelligence controlled vehicle, a trained neural network controlled vehicle, a glider, a surface ship, a tank, a personnel carrier, a train, a spacecraft, a space station, a satellite, a high altitude platform system (HAPS), a submarine, an automobile, a power plant, a bridge, a dam, a house, a manufacturing facility, and a building.

A20. A method for controlling taxiing of an aircraft (100, 400), the method comprising:
emitting (700) a first laser beam (231) and a second laser beam (232) from the aircraft (100, 400) using a wavelength configuration (233);
receiving (702) a first backscatter light (234) and a second backscatter light (235) at the aircraft (100, 400) in response to emitting the first laser beam (231) and the second laser beam (232);
generating (704) first backscatter data (241) using the first backscatter light (234) and second backscatter data (242) using the second backscatter light (235);
determining (706) a first signal to noise ratio (251) using the first backscatter data (241) and a second signal to noise ratio (252) using the second backscatter data (242);
controlling (708) the wavelength configuration (233) for the first laser beam (231) and the second laser beam (232) emitted by a lidar system (203, 401) using the first signal to noise ratio (251) and the second signal to noise ratio (252); and
performing (710) a taxiing operation (276) for the aircraft (100, 400) using the first backscatter data (241) and the second backscatter data (242).

A21. The method of clause A20, wherein the taxiing operation (276) comprises at least one of reducing a taxiing speed of the aircraft (100, 400), displaying a number of objects identified in the first backscatter data (241) and the second backscatter data (242), generating an alert.

A22. The method of clause A20 or A21, wherein controlling the wavelength configuration (233), comprises:
changing (900) the wavelength configuration (233) to a new wavelength configuration (233) in response to at least one of the first signal to noise ratio (251) or the second signal to noise ratio (252) being greater than a signal to noise threshold (253, 501) for the first signal to noise ratio (251) and the second signal to noise ratio (252).

A23. The method of clause A22, wherein controlling the wavelength configuration (233) further comprises:
identifying (1000) the signal to noise threshold (253, 501) based on atmospheric conditions and a taxiing speed for the aircraft (100, 400).

A24. The method of clause A22 or A23, wherein the new wavelength configuration (233) is selected from a first wavelength for the first laser beam (231) and a second wavelength for the second laser beam (232); the second wavelength for the first laser beam (231) and the first wavelength for the second laser beam (232); the first wavelength for the first laser beam (231) and the first wavelength for the second laser beam (232); and the second wavelength for the first laser beam (231) and the second wavelength for the second laser beam (232).

A25. The method of any of clauses A22 to A24, wherein the new wavelength configuration (233) is a first wavelength for the first laser beam (231) and a second wavelength for the second laser beam (232).

A26. The method of any of clauses A20 to A25, wherein the lidar system (203, 401) comprises at least one of an optical phased array lidar, rotating lidar, mems lidar, coherent lidar, direct detection lidar, pulsed lidar, or a continuous wave lidar.

A27. The method of any of clauses A20 to A26, wherein the aircraft (100, 400) is selected from a group comprising a commercial airplane, a cargo airplane, a tilt-rotor aircraft, a tilt wing aircraft, a vertical takeoff and landing aircraft, a rotorcraft, an unmanned aerial vehicle, an artificial intelligence controlled aircraft, a drone, an electric vertical takeoff and landing vehicle, a personal air vehicle, and a spaceplane.

A28. A method for controlling a lidar system (203, 401), the method comprising:
emitting (600) a first laser beam (231) and a second laser beam (232) from a platform;
receiving (602) a first backscatter light (234) at the platform in response to emitting the first laser beam (231) and a second backscatter light (235) at the platform in response to emitting the second laser beam (232);
generating (604) first backscatter data (241) using the first backscatter light (234) and second backscatter data (242) using the second backscatter light (235);
determining (606) a first signal to noise ratio (251) using the first backscatter data (241) and a second signal to noise ratio (252) using the second backscatter data (242); and
controlling (608) a configuration wavelength for the first laser beam (231) and the second laser beam (232) emitted by lidar system (203, 401) using the first signal to noise ratio (251) and the second signal to noise ratio (252).

## Claims

1. A sensor system comprising:
a lidar system (203, 401) configured to perform operations comprising:
emitting a first laser beam (231) from a platform and a second laser beam (232) from the platform;
receiving first backscatter light (234) at the platform in response to emitting the first laser beam (231) and second backscatter light (235) at the platform in response to emitting the second laser beam (232);
generating first backscatter data (241) using the first backscatter light (234) and second backscatter data (242) using the second backscatter light (235); and
a controller (214, 402) configured to perform operations comprising:
determining a first signal to noise ratio (251) using the first backscatter data (241) and a second signal to noise ratio (252) using the second backscatter data (242); and
controlling a wavelength configuration (233) for the first laser beam (231) and the second laser beam (232) emitted by the lidar system (203, 401) using the first signal to noise ratio (251) and the second signal to noise ratio (252).

2. The sensor system of claim 1, wherein controlling the wavelength configuration (233) comprises:
changing the wavelength configuration (233) to a new wavelength configuration (233) in response to at least one of the first signal to noise ratio (251) or the second signal to noise ratio (252) being greater than a signal to noise threshold (253, 501) for the first signal to noise ratio (251) and the second signal to noise ratio (252).

3. The sensor system of claim 2, wherein controlling the wavelength configuration (233) comprises:
identifying the signal to noise threshold (253, 501) based on atmospheric conditions.

4. The sensor system of claim 2 or 3, wherein the new wavelength configuration (233) is selected from:
a first wavelength for the first laser beam (231) and a second wavelength for the second laser beam (232);
the second wavelength for the first laser beam (231) and the first wavelength for the second laser beam (232);
the first wavelength for the first laser beam (231) and the first wavelength for the second laser beam (232); and
the second wavelength for the first laser beam (231) and the second wavelength for the second laser beam (232).

5. The sensor system of any of claims 2 to 4, wherein the new wavelength configuration (233) is a first wavelength for the first laser beam (231) and a second wavelength for the second laser beam (232).

6. The sensor system of any of claims 1 to 5, wherein the controller (214, 402) is configured to determine a number of parameters for the platform and, optionally, the number of parameters is selected from at least one of a speed, a direction of travel, a temperature, air density, an angle of sideslip, an angle of attack, a presence of a group of objects, an atmospheric condition, aerosol particle concentration, aerosol properties, cloud properties, wind direction, or an atmospheric temperature.

7. The sensor system of any of claims 1 to 6, wherein the at least one of the first laser beam (231) or the second laser beam (232) are directed towards a surface of a second platform and wherein the controller (214, 402) is configured to detect an inconsistency on a surface of the second platform using at least one of the first backscatter data (241) or the second backscatter data (242).

8. The sensor system of any of claims 1 to 7, wherein the lidar system (203, 401) comprises at least one of an optical phased array lidar, rotating lidar, mems lidar, coherent lidar, direct detection lidar, pulsed lidar, or a continuous wave lidar.

9. The sensor system of any of claims 1 to 8, wherein the platform is selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, an artificial intelligence controlled vehicle, a trained neural network controlled vehicle, a glider, a surface ship, a tank, a personnel carrier, a train, a spacecraft, a space station, a satellite, a high altitude platform system (HAPS), a submarine, an automobile, a power plant, a bridge, a dam, a house, a manufacturing facility, and a building.

10. The sensor system of any of claims 1 to 9, wherein the platform is an aircraft (100, 400).

11. The sensor system of claim 10 wherein, in controlling the wavelength configuration (233), the controller (214, 402) is configured to identify the signal to noise threshold (253, 501) based on atmospheric conditions and a taxiing speed for the aircraft (100, 400).

12. The sensor system of claim 10 or 11, wherein the controller (214, 402) is configured to perform a taxiing operation (276) for the aircraft (100, 400) using the first backscatter data (241) and the second backscatter data (242).

13. The sensor system of claim 12, wherein the taxiing operation (276) comprises at least one of reducing a taxiing speed of the aircraft (100, 400), displaying a number of objects identified in the first backscatter data (241) and the second backscatter data (242), or generating an alert.

14. An aircraft (100, 400) comprising the sensor system of any of claims 10 to 13.

15. A method for controlling taxiing of an aircraft (100, 400), the method comprising:
emitting (700) a first laser beam (231) and a second laser beam (232) from the aircraft (100, 400) using a wavelength configuration (233);
receiving (702) a first backscatter light (234) and a second backscatter light (235) at the aircraft (100, 400) in response to emitting the first laser beam (231) and the second laser beam (232);
generating (704) first backscatter data (241) using the first backscatter light (234) and second backscatter data (242) using the second backscatter light (235);
determining (706) a first signal to noise ratio (251) using the first backscatter data (241) and a second signal to noise ratio (252) using the second backscatter data (242);
controlling (708) the wavelength configuration (233) for the first laser beam (231) and the second laser beam (232) emitted by a lidar system (203, 401) using the first signal to noise ratio (251) and the second signal to noise ratio (252); and
performing (710) a taxiing operation (276) for the aircraft (100, 400) using the first backscatter data (241) and the second backscatter data (242).
